# FASCICULE DE BREVET EUROPEEN

(11) **EP 3 628 599 B1**
(45) Date de publication et mention de la délivrance du brevet: **12.01.2022**
(21) Numéro de dépôt: 19197623.2
(22) Date de dépôt: 16.09.2019
(51) Int. Cl.: B64F 5/10, B64F 5/50, B21J 15/14, B21J 15/42, B23K 37/02, B23K 37/053, B23K 37/04, B64C 1/12, B23K 101/00, B23K 101/06, B64C 1/06

(54) **PROCÉDÉ, OUTILLAGE ET UNITÉ DE PRODUCTION DE TRONÇONS DE FUSELAGE D'AÉRONEF**
VERFAHREN, WERKZEUG UND ANLAGE ZUR HERSTELLUNG VON RUMPFABSCHNITTEN EINES LUFTFAHRZEUGS
METHOD, TOOL AND UNIT FOR PRODUCING AIRCRAFT FUSELAGE SECTIONS

(30) Priorité: 25.09.2018 FR 1858741
(43) Date de publication de la demande: 01.04.2020
(73) Titulaire: Airbus Operations, 31060 Toulouse (FR); Airbus, 31700 Blagnac (FR)
(72) Inventeur: DATAS, Jean-Marc, 31200 Toulouse (FR); BRINDEAU, Jean-Mickael, 31700 Blagnac (FR); AQUILA, André, 31700 Cornebarrieu (FR); GUIBERT, Patrick, 31830 Plaisance du Touch (FR)
(74) Mandataire: Fantin, Laurent

(56) Documents cités:
- EP-A1- 2 853 495
- WO-A1-2017/134898
- CN-Y- 201 423 426
- DE-U1-202017 105 281
- FR-A1- 2 788 743
- US-A- 6 121 781
- US-A1- 2013 019 446
- US-A1- 2018 043 452

## Description

La présente demande se rapporte à un procédé d'assemblage d'un tronçon de fuselage d'aéronef à partir de deux parties supérieure et inférieure superposées, à un outillage utilisés pour la mise en œuvre dudit procédé ainsi qu'à une unité de production de tronçons de fuselage pour la mise en œuvre dudit procédé.

Pour la présente demande, une direction longitudinale est parallèle à l'axe d'un fuselage d'aéronef qui s'étend approximativement entre une pointe avant et une pointe arrière du fuselage. Un plan transversal est perpendiculaire à la direction longitudinale.

Le fuselage comprend une structure constituée de renforts longitudinaux et transversaux et une peau rapportée sur la structure. Le fuselage est obtenu en assemblant bout à bout plusieurs tronçons qui sont chacun obtenus en assemblant plusieurs panneaux en fonction de la section transversale du fuselage. Ainsi, pour les avions civils présentant une petite section transversale, les tronçons sont obtenus en assemblant deux panneaux supérieur et inférieur alors que pour les avions civils présentant une section transversale importante, les tronçons sont obtenus en assemblant quatre panneaux, des panneaux supérieur et inférieur entre lesquels sont intercalés des panneaux latéraux.

Selon un mode opératoire, les panneaux sont réalisés dans une première unité de production puis sont transportés dans une deuxième unité de production dans laquelle ils sont assemblés de manière à former des tronçons de fuselage.

Cette deuxième unité de production comprend plusieurs postes au niveau de chacun desquels, tour à tour, le tronçon de fuselage et/ou une ou des partie(s) du tronçon de fuselage sont immobilisés.

Selon un mode de réalisation, le tronçon de fuselage et/ou le ou les partie(s) du tronçon de fuselage sont déplacés d'un poste à l'autre à l'aide d'un pont roulant ou d'un chariot et sont positionnés au niveau de chacun des postes sur un support de montage reposant au sol autour duquel sont agencées des plate-formes et des passerelles d'accès pour les opérateurs.

Selon ce mode de réalisation, il existe autant de supports de montage que de postes, ces supports de montage étant différents d'une famille d'avions à l'autre. Par conséquent, chaque unité de production est dédiée à une famille d'avions, ce qui tend à augmenter le nombre d'unités de production. De plus, en fonction des avions à réaliser pour chaque famille, une unité de production peut être sous-utilisée alors que les autres sont à leurs capacités maximales de production.

Le document EP 2 853 495 A1 concerne un procédé d'assemblage d'un fuselage d'aéronef, une station de fabrication de fuselage et un kit de construction. Dans cet agencement selon le procédé, une unité de cockpit pré-assemblée, un caisson de voilure pré-assemblé, un empennage pré-assemblé et une pluralité de segments de tronçon de fuselage préfabriqués sont fournis.

Le document US 6,121,781 A concerne une machine à outillage pour le positionnement de panneaux pour la réalisation de diverses opérations dans l'industrie aéronautique et notamment pour le rivetage automatique du fuselage. La machine comprend un ensemble de plusieurs unités flexibles, chacune des unités flexibles comprenant une série d'arcs montés sur deux rails, de telle sorte que chaque arc comprend un ensemble de colonnes de support télescopiques, sur une extrémité libre de chacune desquelles repose un tête de travail.

La présente invention vise à remédier à tout ou partie des inconvénients de l'art antérieur.

A cet effet, l'invention a pour objet un procédé d'assemblage d'un tronçon de fuselage à partir de plusieurs panneaux, caractérisé en ce qu'il comprend :
- des étapes de positionnement et de jonction d'au moins deux panneaux de manière à obtenir une partie inférieure du tronçon, lesdits panneaux de la partie inférieure du tronçon étant solidarisés à un support de montage inférieur configuré pour se déplacer le long d'un premier chemin,
- des étapes de positionnement et de jonction d'au moins deux panneaux de manière à obtenir une partie supérieure du tronçon, lesdits panneaux de la partie supérieure du tronçon étant solidarisés à un support de montage supérieur configuré pour se déplacer le long d'un deuxième chemin,
- une étape de déplacement d'au moins un des supports de montage inférieur ou supérieur de manière à ce que le support de montage supérieur soit positionné au-dessus du support de montage inférieur,

- des étapes de positionnement et de jonction des parties inférieure et supérieure du tronçon de manière à obtenir le tronçon de fuselage, et
- des étapes de démoulage et d'évacuation du tronçon de fuselage réalisé.

Le fait de réaliser le tronçon de fuselage en assemblant des parties inférieure et supérieure du tronçon, chacune d'elles étant obtenue en assemblant au moins deux panneaux, permet, quelle que soit la section du tronçon de fuselage (et donc la famille d'avions), de pouvoir utiliser le même procédé d'assemblage, le même outillage et la même unité de production. Ainsi, une même unité de production peut être utilisée pour assembler des tronçons de fuselage de différentes familles d'avions.

Selon une autre caractéristique, le procédé comprend, pour chaque support de montage inférieur ou supérieur, une étape de contrôle du positionnement de chaque panneau et une étape de correction du positionnement de chaque panneau grâce à une liaison, reliant chaque panneau et l'un des supports de montage inférieur et supérieur, configurée pour permettre d'ajuster le positionnement de chaque panneau selon une configuration souhaitée et pour immobiliser les panneaux par rapport aux supports de montage inférieur et supérieur selon la configuration souhaitée.

Selon une autre caractéristique, i) chaque panneau est relié de manière démontable à une ossature équipée d'au moins trois interfaces panneaux ; ii) chaque support de montage inférieur ou supérieur comprend au moins un châssis mobile le long du premier ou deuxième chemin et, pour chaque panneau, au moins trois interfaces supports reliées chacune par l'intermédiaire d'une liaison réglable selon trois directions orthogonales au châssis ; et iii) l'étape de positionnement de chaque panneau sur l'un des supports de montage inférieur et supérieur consiste à faire coopérer chaque interface panneau avec l'une des interfaces supports dans une position centrée de manière à ce que la position de chaque panneau par rapport à l'un des supports de montage inférieur et supérieur soit connue.

Selon une autre caractéristique, le support de montage supérieur est transféré sur le premier chemin au niveau duquel les étapes de positionnement et de jonction des parties inférieure et supérieure du tronçon sont réalisées.

Selon une autre caractéristique, les premier et deuxième chemins décrivent chacun une boucle fermée et la boucle, formée par le premier ou deuxième chemin au niveau duquel est réalisée l'étape de positionnement et de jonction des parties inférieure et supérieure du tronçon, est ouverte pour permettre l'étape d'évacuation du tronçon de fuselage réalisé.

L'invention a également pour objet un outillage pour la mise en œuvre du procédé d'assemblage d'un tronçon de fuselage selon l'une des caractéristiques précédentes, caractérisé en ce que l'outillage comporte un support de montage inférieur ou supérieur comprenant un châssis et, pour chaque panneau, au moins trois interfaces supports reliées chacune au châssis par l'intermédiaire d'une liaison réglable selon trois directions orthogonales ainsi que, pour chaque panneau, une ossature configurée pour être reliée de manière démontable au panneau et limiter ses déformations lors d'un transport, équipée d'au moins trois interfaces panneaux configurées chacune pour coopérer avec une interface support dans une position centrée.

Selon une autre caractéristique, le châssis est télescopique et comprend un châssis avant, un châssis arrière ainsi qu'une liaison télescopique, reliant les châssis avant et arrière, configurée pour occuper un état mobile dans lequel la liaison télescopique permet d'écarter plus ou moins les châssis avant et arrière et un état bloqué dans lequel la liaison télescopique maintient les châssis avant et arrière dans une position donnée.

Selon une autre caractéristique, le support de montage inférieur ou supérieur comprend au moins un système de déplacement vertical configuré pour déplacer le châssis verticalement.

Selon une autre caractéristique, chaque système de déplacement vertical comprend un corps, auquel sont reliés deux systèmes de guidage du support de montage inférieur ou supérieur par rapport au premier ou deuxième chemin, ainsi qu'au moins une glissière verticale configurée pour relier le corps au châssis.

Selon une autre caractéristique, chaque support de montage inférieur ou supérieur comprend des capteurs d'efforts permettant de déterminer au moins un effort exercé par chaque panneau sur le support de montage inférieur ou supérieur.

Selon une autre caractéristique, pour au moins certains couples d'interfaces support et panneau, l'interface support et/ou l'interface panneau comprend un système d'immobilisation dans la position centrée.

Selon une autre caractéristique, chaque couple d'interfaces support et panneau comprend une partie mâle et une partie femelle comportant une butée, ladite partie mâle étant configurée pour être introduite selon un sens d'introduction dans la partie femelle jusqu'à venir en contact avec la butée dans la position centrée, les parties mâle et femelle étant configurées de sorte que, lorsque la partie mâle est dans la position centrée, la partie mâle soit immobilisée par rapport à la partie femelle dans un plan perpendiculaire au sens d'introduction et ne puisse pas se translater selon le sens d'introduction.

L'invention a également pour objet une unité de production pour la mise en œuvre du procédé d'assemblage d'un tronçon de fuselage selon l'invention, caractérisée en ce que l'unité de production comprend un premier chemin comportant un premier poste de positionnement des panneaux et un premier poste de jonction des panneaux, un outillage comportant un support de montage inférieur, selon l'invention, déplaçable le long du premier chemin du premier poste de positionnement des panneaux jusqu'au premier poste de jonction des panneaux ; un deuxième chemin comportant un deuxième poste de positionnement des panneaux et un deuxième poste de jonction des panneaux ainsi qu'un outillage comportant un support de montage supérieur, selon l'invention, déplaçable le long du deuxième chemin du deuxième poste de positionnement des panneaux jusqu'au deuxième poste de jonction (46) des panneaux, un poste de transfert permettant aux supports de montage inférieur ou supérieur de passer d'un chemin à l'autre de manière à atteindre un poste de positionnement et de jonction des première et deuxième parties du tronçon.

Selon une autre caractéristique, i) le poste de positionnement et de jonction des parties inférieure et supérieure du tronçon est positionné au niveau du premier chemin ; ii) le premier chemin est configuré pour permettre à chaque support de montage inférieur de se déplacer au-dessous du premier chemin et à chaque support de montage supérieur de se déplacer au-dessus d'au moins une partie du premier chemin et iii) le deuxième chemin est configuré pour permettre à chaque support de montage supérieur de se déplacer au-dessus du deuxième chemin.

Selon une autre caractéristique, i) le premier chemin décrit une boucle fermée pour permettre à tous les supports de montage inférieurs de revenir, à l'issue de l'assemblage d'un tronçon de fuselage, au premier poste de positionnement des panneaux ; et ii) le deuxième chemin décrit une boucle fermée pour permettre à tous les supports de montage supérieurs de revenir, à l'issue de l'assemblage d'un tronçon de fuselage, au deuxième poste de positionnement des panneaux.

Selon une autre caractéristique, le poste de transfert comprend des premier et deuxième ponts tournants avals prévus au niveau des premier et deuxième chemins, un chemin de transfert reliant les premier et deuxième ponts tournants avals et au moins un ascenseur pour au moins l'un des premier et deuxième ponts tournants avals.

Selon une autre caractéristique, le chemin de transfert est à la même hauteur que le premier chemin et le poste de transfert comprend un premier ascenseur pour premier pont tournant aval du premier chemin ainsi qu'un deuxième ascenseur pour le deuxième pont tournant aval du deuxième chemin.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un tronçon de fuselage,
- La figure 2 est une section transversale de deux tronçons de fuselage qui présentent des sections transversales différentes,
- La figure 3A est une section transversale des panneaux d'une partie inférieure d'un tronçon de fuselage,
- La figure 3B est une section transversale des panneaux d'une partie supérieure d'un tronçon de fuselage,
- La figure 4 est une vue en perspective d'un panneau d'un tronçon de fuselage équipé d'une ossature,
- La figure 5 est une vue en perspective depuis le dessus d'un support de montage inférieur,
- La figure 6 est une vue en perspective des interfaces d'un panneau et du support de montage inférieur visible sur la figure 5,
- La figure 7 est une vue en perspective depuis le dessous du support de montage inférieur visible sur la figure 5,
- La figure 8 est une vue en perspective de conteneurs de stockage de panneaux de tronçons de fuselage,
- La figure 9 est une coupe transversale d'un support de stockage supportant deux panneaux,
- La figure 10 est une vue en perspective du support de montage inférieur visible sur la figure 5 et de chariots de transport de panneaux,
- Les figures 11A à 11D sont des coupes transversales du support de montage inférieur visible sur la figure 5 illustrant les différentes étapes de mise en place des panneaux sur le support de montage inférieur,
- La figure 12 est une vue en perspective depuis le dessus d'un support de montage supérieur,
- La figure 13 est une vue en perspective depuis le dessous du support de montage supérieur visible sur la figure 12,
- La figure 14 est une vue en perspective d'une unité de production de tronçons de fuselage qui illustre un mode de réalisation de l'invention,
- La figure 15 est une vue de dessus de l'unité de production de tronçons de fuselage visible sur la figure 14,
- La figure 16A est une vue de face d'un poste de contrôle du positionnement des panneaux reliés à un support de montage inférieur qui illustre un mode de réalisation de l'invention,
- La figure 16B est une vue de face d'un poste de contrôle du positionnement des panneaux reliés à un support de montage supérieur qui illustre un mode de réalisation de l'invention,
- La figure 17A est une vue de face d'un poste de jonction des panneaux d'une partie inférieure d'un tronçon de fuselage,
- La figure 17B est une vue de face d'un poste de jonction des panneaux d'une partie supérieure d'un tronçon de fuselage,
- Les figures 18A et 18E sont des vues en perspective illustrant les différentes étapes de positionnement d'un support de montage supérieur sur un support de montage inférieur,
- La figure 19 est une vue de face d'un poste de positionnement et de jonction des parties inférieure et supérieure d'un tronçon de fuselage qui illustre un mode de réalisation de l'invention,
- Les figures 20A à 20H sont des vues en perspective qui illustrent les différentes étapes d'évacuation d'un tronçon de fuselage réalisé.

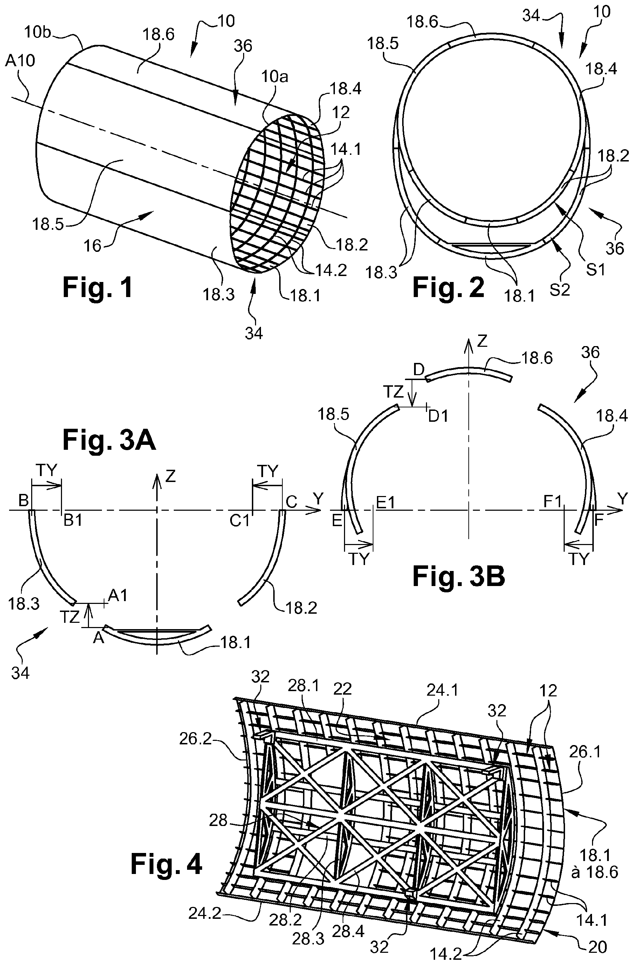

Sur la figure 1, on a représenté un tronçon de fuselage 10 qui présente une forme approximativement cylindrique et un axe A10 (parallèle à la direction longitudinale). Le tronçon de fuselage 10 s'étend entre des premier et deuxième bords périphériques transversaux 10a, 10b disposés dans des plans transversaux. Le tronçon de fuselage 10 comprend une structure 12 qui comporte des renforts longitudinaux 14.1 (appelés lisses) et des renforts transversaux 14.2 (appelés cadres) et une peau 16 rapportée sur la structure 12.

Comme illustré sur la figure 2, selon un premier mode de réalisation, le tronçon de fuselage 10 présente une section transversale S1 approximativement circulaire ou, selon un deuxième mode de réalisation, une section transversale S2 approximativement ovoïde.

Selon une configuration, le tronçon de fuselage 10 comprend six panneaux 18.1 à 18.6 répartis sur sa circonférence, un panneau inférieur 18.1, des panneaux latéraux inférieurs droit et gauche 18.2, 18.3, des panneaux latéraux supérieurs droit et gauche 18.4, 18.5 et un panneau supérieur 18.6.

Comme illustré sur la figure 4, chaque panneau 18.1 à 18.6 comprend une paroi 20 formant une partie de la peau 16 du tronçon du fuselage et une structure 12, rapportée sur l'une des faces dite face interne 22 de la paroi 20, comportant des raidisseurs longitudinaux 14.1 et des portions de raidisseurs transversaux 14.2. Chaque panneau 18.1 à 18.6 comprend deux bords longitudinaux 24.1, 24.2 parallèles et deux bords transversaux 26.1, 26.2 qui constituent des portions des bords périphériques transversaux 10a, 10b.

Chaque panneau 18.1 à 18.6 est produit au niveau d'une première unité de production qui peut être distante d'une deuxième unité de production au niveau de laquelle les panneaux 18.1 à 18.6 sont assemblés de manière à obtenir des tronçons de fuselage 10.

Comme illustré sur la figure 4, chaque panneau 18.1 à 18.6 comprend une ossature 28, solidaire de la face interne 22, reliée au panneau par au moins une liaison démontable, par exemple à l'aide de broches ou de vis vissées dans des taraudages prévus au niveau de la structure 12 du panneau 18.1 à 18.6. Selon un mode de réalisation, cette ossature 28 comprend un cadre 28.1 ainsi que des renforts longitudinaux 28.2, transversaux 28.3 et obliques 28.4. Cette ossature 28 est configurée pour limiter les déformations du panneau 18.1 à 18.6, notamment lors du transport. D'autres fonctions de l'ossature 28 seront précisées ultérieurement.

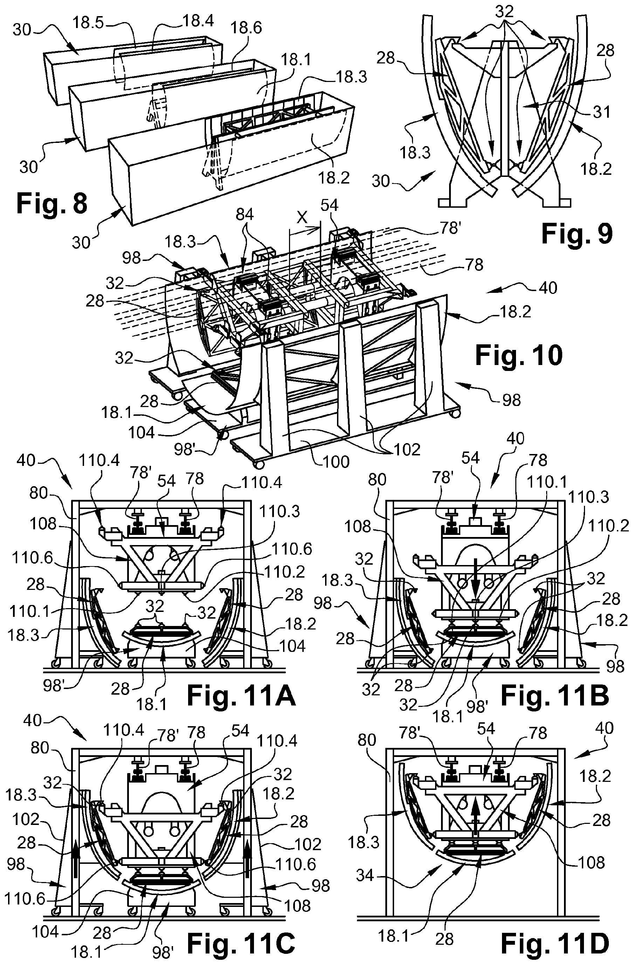

Selon un mode de conditionnement visible sur les figures 8 et 9, les panneaux 18.1 à 18.6 sont stockés dans des conteneurs 30 pour assurer notamment le transport des panneaux 18.1 à 18.6 d'une unité de production à l'autre.

Selon une configuration visible sur la figure 9, chaque conteneur 30 contient deux panneaux 18.2 à 18.3 suspendus sur un support de stockage 31. A cet effet, l'ossature 28 comprend au moins trois interfaces panneaux 32 pour suspendre chaque panneau 18.1 à 18.6 sur un support de stockage. Ces interfaces panneaux 32 seront détaillées ultérieurement. Bien entendu, l'invention n'est pas limitée à ce mode de réalisation pour le stockage des panneaux 18.1 à 18.6.

Selon une caractéristique de l'invention, comme illustré sur les figures 3A et 3B, le tronçon de fuselage 10 est obtenu en assemblant une partie inférieure du tronçon 34, obtenue en assemblant préalablement au moins deux panneaux, et une partie supérieur 36 obtenue en assemblant préalablement au moins deux panneaux. Selon une configuration illustrée par les figures 3A et 3B, la partie inférieure 34 (visible sur la figure 3A) comprend un panneau inférieur 18.1 et des panneaux latéraux inférieurs droit et gauche 18.2, 18.3, la partie supérieure du tronçon 36 (visible sur la figure 3B) comprenant un panneau supérieur 18.6 et des panneaux latéraux supérieurs droit et gauche 18.4, 18.5.

Le procédé d'assemblage du fuselage comprend :
- pour chaque partie inférieure ou supérieure du tronçon 34, 36, une étape de positionnement des panneaux 18.1 à 18.6 et une étape de jonction des panneaux 18.1 à 18.6 de manière à obtenir une partie inférieure ou supérieure du tronçon 34, 36 constituée chacune de trois panneaux,
- une étape de positionnement des parties inférieure et supérieure du tronçon 34, 36 et une étape de jonction des parties inférieure et supérieure du tronçon 34, 36 de manière à obtenir le tronçon de fuselage 10,
- des étapes de démoulage et d'évacuation du tronçon de fuselage 10 ainsi réalisé.

Le procédé d'assemblage peut comprendre une étape de contrôle du positionnement des panneaux 18.1 à 18.6 préalablement à l'étape de jonction des panneaux de manière à obtenir une partie inférieure ou supérieure du tronçon 34, 36.

Selon un mode opératoire, chaque étape de jonction des panneaux 18.1 à 18.6 comprend une étape de jonction des parois 20 des panneaux 18.1 à 18.6 et une étape de jonction des structures 12 des panneaux 18.1 à 18.6 et plus particulièrement des portions des raidisseurs transversaux 14.2 des panneaux 18.1 à 18.6 entre elles. L'étape de jonction des parties inférieure et supérieure du tronçon 34, 36 comprend une étape de jonction des parois 20 des parties inférieure et supérieure du tronçon 34, 36 ainsi qu'une étape de jonction des structures 12 et plus particulièrement des portions des raidisseurs transversaux 14.2 des parties inférieure et supérieure du tronçon 34, 36.

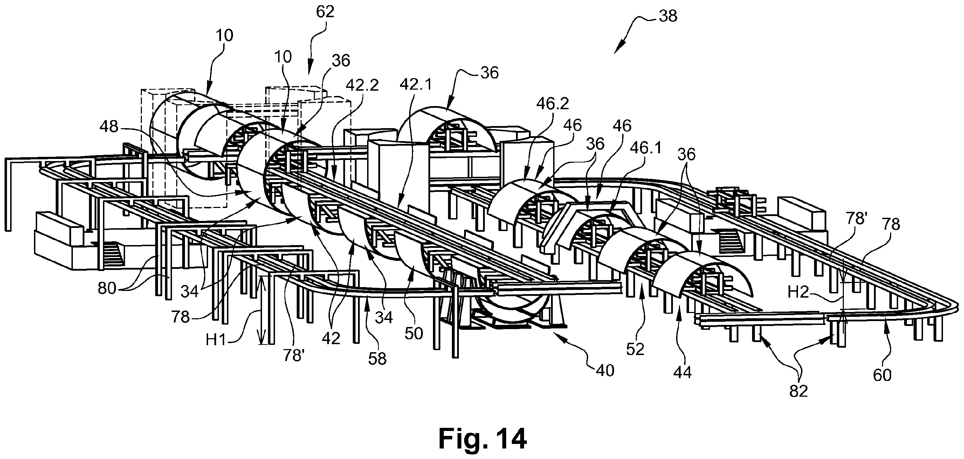

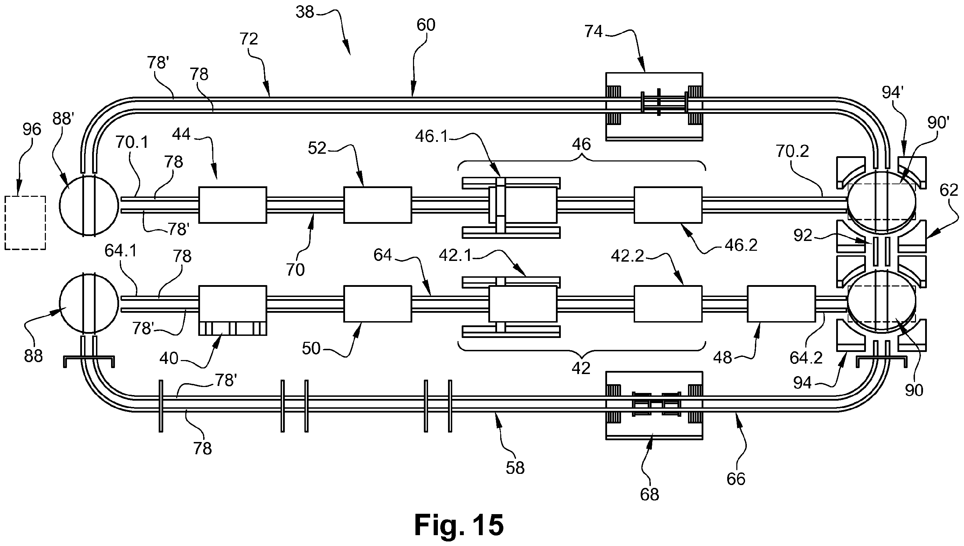

Selon un mode de réalisation visible sur les figures 14 et 15, une unité de production 38 de tronçons de fuselage permettant de mettre en œuvre le procédé d'assemblage comprend :
- Pour la partie inférieure de tronçon 34 :
   ∘ un premier poste de positionnement 40 des panneaux 18.1 à 18.3,
   ∘ un premier poste de jonction 42 des panneaux 18.1 à 18.3,
- Pour la partie supérieure de tronçon 36 :
   ∘ un deuxième poste de positionnement 44 des panneaux 18.4 à 18.6,
   ∘ un deuxième poste de jonction 46 des panneaux 18.4 à 18.6,
- Pour les parties inférieure et supérieure du tronçon 34, 36 :
   ∘ Un poste de positionnement et de jonction 48.

Selon un mode de réalisation, l'unité de production 38 comprend, pour la partie inférieure du tronçon 34, un premier poste de contrôle du positionnement 50, intercalé entre le premier poste de positionnement 40 et le premier poste de jonction 42 et/ou, pour la partie supérieure du tronçon 36, un deuxième poste de contrôle du positionnement 52 intercalé entre le deuxième poste de positionnement 44 et le deuxième poste de jonction 46. Le premier poste de jonction 42 peut être décomposé en un premier poste de jonction 42.1 des parois 20 des panneaux 18.1 à 18.3 et un premier poste de jonction 42.2 des structures 12 des panneaux 18.1 à 18.3. Le deuxième poste de jonction 46 peut être décomposé en un deuxième poste de jonction 46.1 des parois 20 des panneaux 18.4 à 18.6 et un deuxième poste de jonction 46.2 des structures 12 des panneaux 18.4 à 18.6. De même, le poste de positionnement et de jonction 48 des parties inférieure et supérieure du tronçon 34, 36 pourrait être décomposé en plusieurs postes, par exemple un dédié au positionnement, un autre dédié à la jonction des parois et enfin un autre dédié à la jonction des structures.

Le fait de regrouper plusieurs opérations sur un même poste ou de les répartir sur plusieurs postes est déterminé de manière à obtenir des durées d'intervention sensiblement homogènes sur chacun des postes.

Selon une autre caractéristique, l'unité de production 38 comprend au moins un support de montage inférieur 54 configuré pour supporter le panneau inférieur 18.1 et les panneaux latéraux inférieurs droit et gauche 18.2, 18.3 puis les déplacer d'un poste à l'autre, ainsi qu'au moins un support de montage supérieur 56 configuré pour supporter le panneau supérieur 18.6 et les panneaux latéraux supérieurs droit et gauche 18.4, 18.5 et les déplacer d'un poste à l'autre.

Selon une autre caractéristique, l'unité de production 38 comprend au moins deux chemins, un premier chemin 58 configuré pour permettre au support de montage inférieur 54 de se déplacer du premier poste de positionnement 40 des panneaux 18.1 à 18.3 jusqu'au premier poste de jonction 42 des panneaux 18.1 à 18.3 ainsi qu'un deuxième chemin 60 configuré pour permettre au support de montage supérieur 56 de se déplacer du deuxième poste de positionnement 44 des panneaux 18.4 à 18.6 jusqu'au deuxième poste de jonction 46 des panneaux 18.4 à 18.6, le poste de positionnement et de jonction 48 des parties inférieure et supérieur du tronçon 34, 36 étant positionné au niveau du premier chemin 58 ou du deuxième chemin 60.

Selon un mode de réalisation, le premier chemin 58 décrit une boucle fermée pour permettre à tous les supports de montage inférieurs 54 de revenir, à l'issue de l'assemblage d'un tronçon de fuselage 10, au premier poste de positionnement 40 des panneaux 18.1 à 18.3. En parallèle, le deuxième chemin 60 décrit une boucle fermée pour permettre à tous les supports de montage supérieurs 56 de revenir, à l'issue de l'assemblage d'un tronçon de fuselage 10, au deuxième poste de positionnement 44 des panneaux 18.1 à 18.3. L'unité de production 38 comprend un poste de transfert 62 permettant aux supports de montage inférieur 54 ou supérieur 56 de passer d'un chemin à l'autre de manière à atteindre le poste de positionnement et de jonction 48 des première et deuxième parties du tronçon 34, 36. Le premier ou deuxième chemin 58, 60 comportant le poste de positionnement et de jonction 48 présente une section mobile configurée pour occuper une position continue dans laquelle elle assure la continuité du chemin de manière à obtenir une boucle fermée et une position décalée dans laquelle elle ouvre la boucle pour permettre l'évacuation du tronçon de fuselage 10 réalisé.

Selon une configuration, le poste de transfert 62 permet à chacun des supports de montage supérieurs 56 d'être transféré, à l'issue du deuxième poste de jonction 46, vers le poste de positionnement et de jonction 48 positionné au niveau du premier chemin 58 après le premier poste de jonction 42.

Selon un mode de réalisation, le premier chemin 58 comprend une première portion de montage 64, qui s'étend d'une première extrémité amont 64.1 jusqu'à une première extrémité aval 64.2, au niveau de laquelle sont positionnés le premier poste de positionnement 40, l'éventuel premier poste de contrôle du positionnement 50, le ou les poste(s) de jonction 42 et le poste de positionnement et de jonction 48 ; ainsi qu'une première portion de retour 66, comportant au moins un premier poste de reconditionnement 68, reliant les premières extrémités aval et amont 64.1, 64.2 de la première portion de montage 64. Le deuxième chemin 60 comprend une deuxième portion de montage 70, qui s'étend d'une deuxième extrémité amont 70.1 jusqu'à une deuxième extrémité aval 70.2, au niveau de laquelle sont positionnés le deuxième poste de positionnement 44, l'éventuel deuxième poste de contrôle du positionnement 52 et le ou les poste(s) de jonction 46 ; ainsi qu'une deuxième portion de retour 72, comportant au moins un deuxième poste de reconditionnement 74, reliant les deuxièmes extrémités aval et amont 70.1, 70.2 de la deuxième portion de montage 70. Le poste de transfert 62 est configuré pour assurer le transfert de chaque support de montage supérieur 56 entre les première et deuxième extrémités avals 64.2 et 70.2.

Les premier et deuxième postes de conditionnement 68, 74 sont prévus pour retirer les ossatures 28 et/ou configurer les supports de montage inférieur et supérieur 54, 56 en fonction du fuselage à réaliser.

Le premier chemin 58 est configuré pour permettre à chaque support de montage inférieur 54 de se déplacer au-dessous du premier chemin 58, le long de ce dernier, en s'arrêtant à chaque poste ; et à chaque support de montage supérieur 56 de se déplacer au-dessus du premier chemin 58, au moins sur une partie de ce dernier, notamment celle qui s'étend entre la première extrémité aval 64.2 et le poste de positionnement et de jonction 48.

Le deuxième chemin 60 est configuré pour permettre à chaque support de montage supérieur 56 de se déplacer au-dessus le deuxième chemin 60, le long de ce dernier, en s'arrêtant à chaque poste.

Dans la mesure où les supports de montage inférieurs 54 sont positionnés sous le premier chemin 58 alors que les supports de montage supérieurs 56 sont positionnés au-dessus du deuxième chemin 60, le premier chemin 58 est positionné à une hauteur H1 supérieure à la hauteur H2 du deuxième chemin 60. La hauteur H1 du premier chemin 58 est déterminée de manière à ce que les panneaux 18.1 à 18.3 des tronçons de fuselage présentant les plus grandes sections transversales puissent être solidarisés à un support de montage inférieur 54 circulant sous le premier chemin 58.

Selon un mode de réalisation, chaque chemin 58, 60 comprend au moins un rail 78, de préférence deux rails 78, 78' parallèles entre eux. Pour les premier et deuxième chemins 58, 60, les deux rails 78, 78' sont configurés de la même manière, même section et même espacement. Les rails 78, 78' du premier chemin 58 sont maintenus en hauteur grâce à des portiques 80 pour permettre le passage des supports de montage inférieurs 54 sous le premier chemin 58 et les rails 78, 78' du deuxième chemin 60 sont maintenus en hauteur grâce à des montants 82 pour permettre le passage des supports de montage supérieurs 54 sur le deuxième chemin 60.

Chaque support de montage inférieur 54 comprend au moins un premier système de guidage 84 lui permettant de se déplacer le long du ou des rails(s) 78, 78', de préférence au moins deux, un pour chaque rail 78, 78'. Selon une configuration, au moins l'un des premiers systèmes de guidage 84 est motorisé pour permettre à chaque support de montage inférieur 54 de se déplacer le long des rails 78, 78' de manière autonome.

Chaque support de montage supérieur 56 comprend au moins un deuxième système de guidage 86 lui permettant de se déplacer le long du ou des rails(s) 78, 78', de préférence au moins deux, un pour chaque rail 78, 78'. Selon une configuration, au moins l'un de ces deuxièmes systèmes de guidage 86 est motorisé pour permettre à chaque support de montage supérieur 56 de se déplacer le long des rails 78, 78' de manière autonome.

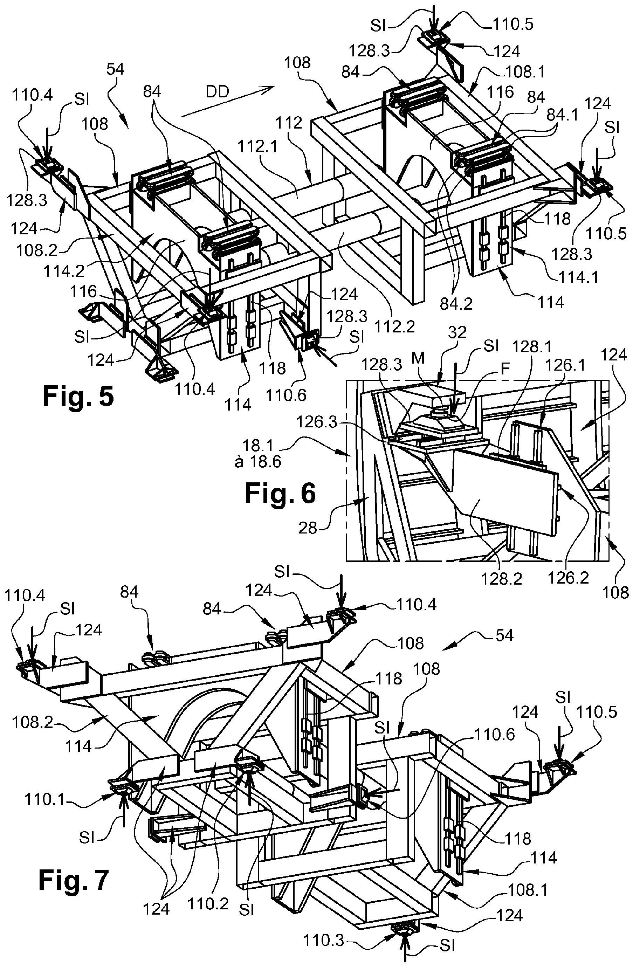

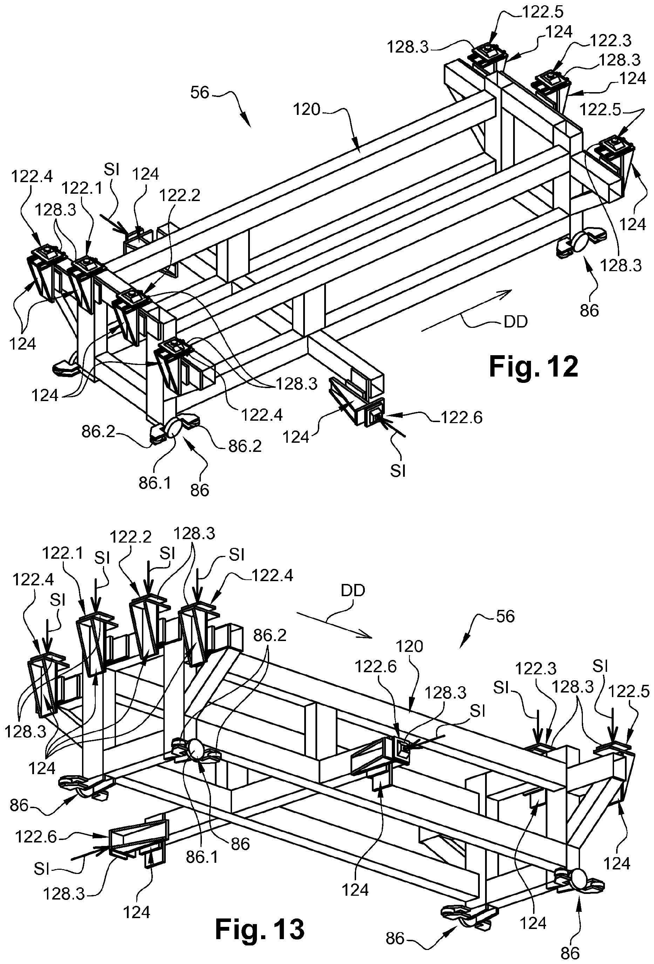

Selon un mode de réalisation, chaque rail 78, 78' a une section en I et présente une âme verticale et des semelles horizontales supérieure et inférieure prévues aux extrémités de l'âme verticale. Comme illustré sur la figure 5, chaque premier système de guidage 84 comprend deux premiers jeux de galets 84.1 présentant des axes de pivotement verticaux, lesdits premiers jeux étant disposés de part et d'autre de l'âme verticale d'un rail 78, 78' et configurés pour rouler sur chaque face de l'âme verticale d'un rail 78, 78'. Chaque premier système de guidage 84 comprend également deux deuxièmes jeux de galets 84.2 présentant des axes de pivotement horizontaux, lesdits deuxièmes jeux étant disposés de part et d'autre de l'âme verticale d'un rail 78, 78' et configurés pour rouler sur la semelle inférieure d'un rail 78, 78'. Comme illustré sur les figures 12 et 13, chaque deuxième système de guidage 86 comprend un premier galet 86.1 qui présente un axe de pivotement horizontal et qui est configuré pour rouler sur une semelle inférieure d'un rail 78, 78' ; ainsi que deux deuxièmes galets 86.2, disposés de part et d'autre du premier galet 86.1, qui présentent des axes de pivotement verticaux et qui sont configurés pour rouler contre l'âme verticale d'un rail 78, 78'.

Selon une configuration visible sur la figure 15, les première et deuxième portions de retour 66, 72 des premier et deuxième chemins 58, 60 décrivent chacune un U. Au niveau de chaque extrémité amont ou aval 64.1, 64.2, 70.1, 70.2, la portion retour 66, 72 et la portion de montage 64, 70 forment un angle de 90°. Chacun des premier et deuxième chemins 58, 60 comprend, au niveau de son extrémité amont 64.1, 70.1, un premier ou deuxième pont tournant amont 88, 88' configuré pour permettre à chaque support de montage inférieur ou supérieur 54, 56 de passer, pour chaque chemin 58, 60, de la portion retour 66, 72 à la portion de montage 64, 70. Chacun des premier et deuxième chemins 58, 60 comprend, au niveau de son extrémité aval 64.2, 70.2, un premier ou deuxième pont tournant aval 90, 90' configuré pour permettre à chaque support de montage inférieur ou supérieur 54, 56 de passer, pour chaque chemin 58, 60, de la portion de montage 64, 70 à la portion retour 66, 72.

Selon un mode de réalisation, chaque pont tournant 88, 88', 90, 90' comprend une plate-forme, en forme de disque, mobile autour d'un axe de pivotement vertical, qui présente deux rails configurés pour être alignés de manière alternée soit avec les rails 78, 78' de la portion retour 66, 72 soit avec les rails 78, 78' de la portion de montage 64, 70.

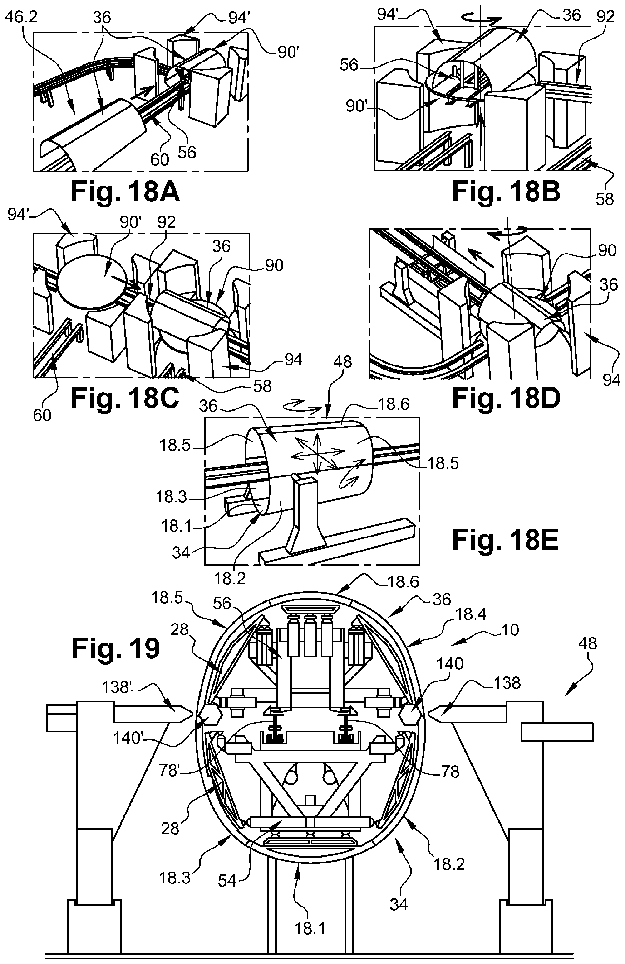

Selon un mode de réalisation visible sur les figures 15, 18A à 18E, le poste de transfert 62 comprend en plus des premier et deuxième ponts tournants avals 90, 90' prévus au niveau des première et deuxième extrémités avals 64.2, 70.2 des premier et deuxième chemins 58, 60, un chemin de transfert 92 reliant les premier et deuxième ponts tournants avals 90, 90' et au moins un ascenseur 94 pour au moins l'un des premier et deuxième ponts tournants avals 90, 90' pour compenser la différence de hauteur entre les premier et deuxième chemins 58, 60 et pour permettre l'évacuation du tronçon de fuselage 10 réalisé. Selon une configuration, le chemin de transfert 92 est à la même hauteur que le premier chemin 58 et le poste de transfert 62 comprend un premier ascenseur 94 pour le premier pont roulant aval 90 du premier chemin 58 afin de permettre l'évacuation du tronçon de fuselage réalisé ; ainsi qu'un deuxième ascenseur 94' pour le deuxième pont roulant aval 90' du deuxième chemin 60 pour compenser la différence de hauteur entre les premier et deuxième chemins 58, 60.

Bien entendu, l'invention n'est pas limitée à ces modes de réalisation pour les chemins 58, 60, pour les systèmes de guidage 84, 86, pour le poste de transfert 62. Quel que soit le mode de réalisation, au moins un des supports de montage inférieur ou supérieur 54, 56 est déplacé de manière à ce que le support de montage supérieur 56 soit positionné au-dessus du support de montage inférieur 54 au niveau du poste de positionnement et de jonction 48.

L'unité de production 38 comprend également une zone de stockage 96 au niveau de laquelle sont stockés les panneaux 18.1 à 18.6 avant d'être assemblés. Selon une configuration, la zone de stockage 96 est positionnée dans le prolongement des première et deuxième portions de montage 64, 70, à proximité des ponts tournants amonts 88, 88'. L'unité de production 38 comprend des chariots de transport 98 pour acheminer chacun des panneaux 18.1 à 18.6 de la zone de stockage 96 jusqu'à l'un des premier et deuxième postes de positionnement 40, 44.

Selon un mode de réalisation visible sur les figures 10, 11A à 11C, chaque chariot de transport 98 comprend une base roulante 100 et au moins deux montants 102 télescopiques verticalement auxquels est relié un panneau 18.2 à 18.5, configurés pour permettre de déplacer ledit panneau 18.2 à 18.5 verticalement afin de le fixer à un support de montage inférieur ou supérieur 54, 56. Certains chariots de transport 98 sont configurés pour transporter des panneaux latéraux droits et d'autres pour les panneaux latéraux gauches.

Chaque chariot de transport 98' destiné aux panneaux supérieur et inférieur 18.1, 18.6 comprend une base roulante 104 configurée pour recevoir un panneau 18.1, 18.6.

Selon un mode de réalisation visible sur les figures 5 à 7, le support de montage inférieur 54 comprend un châssis 108, mobile selon une direction de déplacement DD, présentant des interfaces 110.1 à 110.6 configurées pour coopérer avec des interfaces panneaux 32 afin de solidariser selon une position donnée les panneaux 18.1 à 18.3 au support de montage inférieur 54.

Selon une configuration, le châssis 108 est télescopique et comprend un châssis avant 108.1, un châssis arrière 108.2 ainsi qu'une liaison télescopique 112, reliant les châssis avant et arrière 108.1 et 108.2, configurée pour occuper un état mobile dans lequel la liaison télescopique 112 permet d'écarter plus ou moins les châssis avant et arrière 108.1, 108.2 selon la direction de déplacement DD afin de régler leur écartement et un état bloqué dans lequel la liaison télescopique 112 maintient les châssis avant et arrière 108.1 et 108.2 dans une position donnée. Cette configuration permet de pouvoir utiliser le même support de montage inférieur 54 pour des panneaux 18.1 à 18.3 de différentes longueurs. Selon un mode de réalisation, la liaison télescopique 112 comprend au moins deux tubes télescopiques 112.1, 112.2.

Selon une configuration, le support de montage inférieur 54 comprend au moins un système de déplacement vertical 114 configuré pour déplacer le châssis 108 verticalement, notamment un système de déplacement vertical avant 114.1 pour le châssis avant 108.1, et un système de déplacement vertical arrière 114.2 pour le châssis arrière 108.2. Selon un mode de réalisation, chaque système de déplacement vertical 114, 114.1, 114.2 comprend un corps 116, en forme de U inversé, auquel sont reliés deux systèmes de guidage 84 du support de montage inférieur 54 par rapport au premier chemin 58 ; ainsi qu'au moins une glissière 118 verticale, de préférence deux glissières 118 solidaires des branches du U, configurée pour relier le corps 116 au châssis 108, notamment au châssis avant ou arrière 108.1, 108.2. Cette configuration permet notamment de pouvoir solidariser le panneau inférieur 18.1 au support de montage inférieur 54, comme illustré sur les figures 11A à 11D. La présence d'au moins un système de déplacement vertical 114 permet également de pouvoir régler la position relative des supports de montage inférieur et supérieur 54, 56 au niveau du poste de positionnement et de jonction 48 en fonction de la section transversale du tronçon de fuselage 10 à réaliser, ce qui améliore la polyvalence des supports de montage inférieur et supérieur 54, 56.

Selon un mode de réalisation visible sur les figures 12 et 13, le support de montage supérieur 56 comprend un châssis 120, mobile selon une direction de déplacement DD, présentant des interfaces supports 122.1 à 122.6 configurées pour coopérer avec des interfaces panneaux 32 afin de solidariser selon une position donnée les panneaux 18.4 à 18.6 au support de montage supérieur 56. Comme précédemment, le châssis 120 pourrait être télescopique et comprendre un châssis avant et un châssis arrière reliés par une liaison télescopique, réglable selon la direction de déplacement DD, configurée pour occuper alternativement des états mobile et bloqué.

Si l'un des supports de montage inférieur et supérieur 54, 56 n'est pas télescopique, il peut supporter des panneaux 18.1 à 18.6 de différentes longueurs en ajustant la position des interfaces panneaux 32 et/ou des interfaces supports 110.1 à 110.6, 122.1 à 122.6.

Quel que soit le mode de réalisation, au moins l'un des supports de montage inférieur et supérieur 54, 56 comprend un système de déplacement vertical 114 de son châssis 108, 120 pour pouvoir régler la position relative des supports de montage inférieur et supérieur 54, 56 au niveau du poste de positionnement et de jonction 48 en fonction de la section transversale du tronçon de fuselage 10 à réaliser.

Selon une caractéristique de l'invention, chaque support de montage inférieur ou supérieur 54, 56 comprend, pour au moins certaines interfaces supports 110.1 à 110.6, 122.1 à 122.6, une liaison réglable 124 selon trois directions orthogonales Tx, Ty, Tz, reliant lesdites interfaces 110.1 à 110.6, 122.1 à 122.6 aux châssis 108, 120. Selon une configuration, toutes les interfaces supports 110.1 à 110.6, 122.1 à 122.6 sont reliées chacune aux châssis 108, 120 par une liaison réglable 124 selon trois directions orthogonales Tx, Ty, Tz. Cette configuration permet d'ajuster la position de chaque panneau 18.1 à 18.6. Selon un mode de réalisation illustré par la figure 6, chaque liaison réglable 124 selon trois directions orthogonales Tx, Ty, Tz comprend une première glissière 126.1, mobile selon une direction Tz verticale, reliant le châssis 108, 120 à un premier support 128.1, une deuxième glissière 126.2, mobile selon une direction Ty horizontale et perpendiculaire à la direction de déplacement DD, reliant le premier support 128.1 à un deuxième support 128.2 ainsi qu'une troisième glissière 126.3, mobile selon une direction Tx horizontale et parallèle à la direction de déplacement DD, reliant le deuxième support 128.2 à un troisième support 128.3. Pour chacune des liaisons réglables 124, les mouvements des premier, deuxième et troisième supports 128.1 à 128.3 peuvent être motorisés et contrôlés par un automate.

Grâce à cet agencement, chaque support de montage inférieur ou supérieur 54, 56 peut s'adapter à différentes formes et dimensions de panneaux 18.1 à 18.6 en fonction de la section transversale du tronçon de fuselage 10 à réaliser, ce qui améliore la polyvalence des supports de montage inférieur et supérieur 54, 56.

Pour chaque panneau 18.1 à 18.6, chaque support de montage inférieur ou supérieur 54, 56 comprend au moins trois interfaces supports 110.1 à 110.6, 122.1 à 122.6. Selon une configuration, chaque support de montage inférieur ou supérieur 54, 56 comprend trois interfaces supports 110.1 à 110.6, 122.1 à 122.6 pour chaque panneau 18.1 à 18.6 de manière à obtenir une liaison isostatique entre chaque panneau 18.1 à 18.6 et chaque support de montage inférieur ou supérieur 54, 56.

Lorsque le support de montage inférieur ou supérieur 54, 56 comprend un châssis avant 108.1 et un châssis arrière 108.2, le support de montage inférieur ou supérieur 54, 56 comprend, pour chaque panneau 18.1 à 18.6, au moins une interface support 110.1 à 110.6, 122.1 à 122.6 solidaire du châssis avant 108.1 et au moins une interface support 110.1 à 110.6, 122.1 à 122.6 solidaire du châssis arrière 108.2.

Le support de montage inférieur 54 comprend :
- pour le panneau inférieur 18.1, trois interfaces supports 110.1, 110.2, 110.3 reliées chacune au châssis 108 par une liaison réglable 124 dont le troisième support 128.3 présente une plaque approximativement horizontale,
- pour chacun des panneaux latéraux inférieurs droit et gauche 18.2, 18.3, deux interfaces supports supérieures 110.4, 110.5 positionnées en partie supérieure du châssis 108, sensiblement à la même hauteur, à chacune des extrémités du châssis 108, reliées chacune au châssis 108 par une liaison réglable 124 dont le troisième support 128.3 présente une plaque approximativement horizontale ainsi qu'une interface support inférieure 110.6, positionnée en partie inférieure du châssis 108, reliée au châssis 108 par une liaison réglable 124 dont le troisième support 128.3 présente une plaque sensiblement verticale.

Le support de montage supérieur 56 comprend :
- pour le panneau supérieur 18.6, trois interfaces supports 122.1, 122.2, 122.3 reliées chacune au châssis 120 par une liaison réglable 124 dont le troisième support 128.3 présente une plaque approximativement horizontale,
- pour chacun des panneaux latéraux supérieurs droit et gauche 18.4, 18.5, deux interfaces supports supérieures 122.4, 122.5 positionnées en partie supérieure du châssis 120, sensiblement à la même hauteur, à chacune des extrémités du châssis 120, reliées chacune au châssis 120 par une liaison réglable 124 dont le troisième support 128.3 présente une plaque approximativement horizontale ; ainsi qu'une interface support inférieure 122.6, positionnée en partie inférieure du châssis 120, reliée au châssis 120 par une liaison réglable 124 dont le troisième support 128.3 présente une plaque sensiblement verticale.

Selon une caractéristique de l'invention, chaque interface support 110.1 à 110.6, 122.1 à 122.6 est configurée pour coopérer avec une interface panneau 32 dans une position centrée de manière à ce que l'interface panneau 32 soit immobilisée selon une position connue par rapport à l'interface support 110.1 à 110.6, 122.1 à 122.6. Selon un mode de réalisation visible sur la figure 6, chaque interface support 110.1 à 110.6, 122.1 à 122.6 comprend une partie mâle M configurée pour être introduite dans une partie femelle F solidaire d'une interface panneau 32. Selon un autre mode de réalisation, chaque interface support 110.1 à 110.6, 122.1 à 122.6 comprend une partie femelle F configurée pour recevoir une partie mâle M solidaire d'une interface panneau 32. Pour ces deux modes de réalisation, chaque couple d'interface support et panneau comprend une partie mâle M configurée pour être introduite selon un sens d'introduction SI dans une partie femelle F. Lorsque la partie mâle M est dans la position centrée, la partie mâle M est immobilisée par rapport à la partie femelle F dans un plan perpendiculaire au sens d'introduction SI. Dans la position centrée, la partie mâle M est en contact avec une butée de la partie femelle F et ne peut plus se translater selon le sens d'introduction SI, elle ne peut se translater que selon un sens opposé au sens d'introduction SI.

Lorsque, pour un même panneau 18.1 à 18.6, toutes les interfaces supports 110.1 à 110.6, 122.1 à 122.6 et les interfaces panneaux 32 sont dans la position centrée, la position du panneau 18.1 à 18.6 par rapport au support de montage inférieur ou supérieur 54, 56 est parfaitement connue. Il est possible en réglant les liaisons réglables 124 d'ajuster la position de chaque panneau 18.1 à 18.6 par rapport aux supports de montage inférieur et supérieur 54, 56 et ainsi la position des panneaux 18.1 à 18.6 les uns par rapport aux autres.

Pour au moins certains couples d'interfaces support et panneau, l'interface support 110.1 à 110.6, 122.1 à 122.6 et/ou l'interface panneau 32 comprend un système d'immobilisation dans la position centrée. Un tel système d'immobilisation est nécessaire lorsque le sens d'introduction SI est vertical et orienté vers le haut ou lorsque le sens d'introduction SI est horizontal. Il n'est pas nécessaire lorsque le sens d'introduction SI est vertical et orienté vers le bas. Selon un mode de réalisation, le système d'immobilisation est une pince de serrage à genouillère.

Selon une configuration, les trois interfaces supports 110.1 à 110.3 destinées au panneau inférieur 18.1 présentent un sens d'introduction SI vertical et orienté vers le haut. Les interfaces supports supérieures 110.4, 110.5, 122.4, 122.5 positionnées en partie supérieure des châssis 108, 120, destinées aux panneaux latéraux supérieur et inférieur, droit et gauche 18.2 à 18.5, présentent un sens d'introduction SI vertical orienté vers le bas. Les interfaces supports inférieures 110.6, 122.6, destinées aux panneaux latéraux supérieur et inférieur, droit et gauche 18.2 à 18.5, présentent un sens d'introduction SI horizontal orienté vers le châssis 108, 120. Les trois interfaces supports 122.1 à 122.3, destinées au panneau supérieur 18.6, présentent un sens d'introduction SI vertical et orienté vers le bas.

Bien entendu, l'invention n'est pas limitée aux modes de réalisation précédemment décrits de l'outillage constitué par les supports de montage inférieur et supérieur 54, 56 et les ossatures 28. D'autres solutions selon les revendications annexées pourraient être envisagées pour la liaison entre chaque panneau 18.1 à 18.6 et son support de montage inférieur ou supérieur 54, 56. Cette liaison doit être configurée pour permettre d'ajuster le positionnement (position et orientation) de chaque panneau 18.1 à 18.6 selon une configuration souhaitée et pour immobiliser chaque panneau 18.1 à 18.6 par rapport aux supports de montage inférieur et supérieur 54, 56 selon la configuration souhaitée.

Selon un mode de réalisation, chaque support de montage inférieur ou supérieur 54, 56 est équipé de capteurs d'efforts permettant de déterminer au moins un effort exercé par chaque panneau 18.1 à 18.6 sur le support de montage inférieur ou supérieur 54, 56. Pour chaque panneau 18.1 à 18.6, chaque support de montage inférieur ou supérieur 54, 56 comprend plusieurs capteurs d'efforts permettant de déterminer en plusieurs points les efforts exercés par le panneau 18.1 à 18.6 sur le support de montage inférieur ou supérieur 54, 56. Ces capteurs d'efforts peuvent être utilisés pour ajuster la position de chaque panneau 18.1 à 18.6 sur chacun des supports de montage inférieur ou supérieur 54, 56.

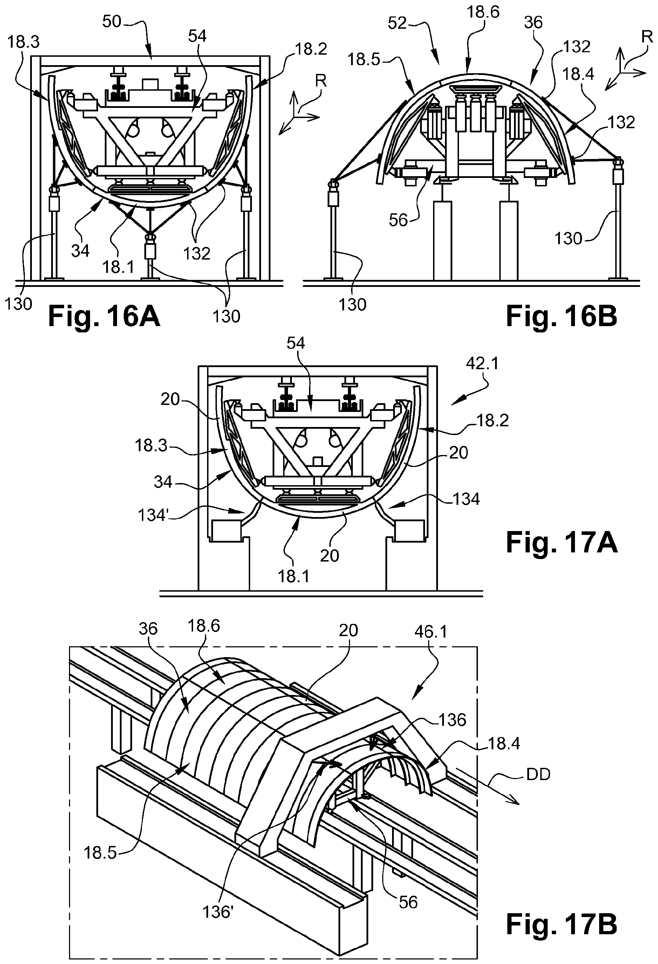

Selon un mode de réalisation visible sur les figures 16A et 16B, chaque premier ou deuxième poste de contrôle du positionnement 50, 52 comprend au moins un télémètre 130 et chaque panneau comprend plusieurs cibles 132, chaque télémètre 130 et chaque cible 132 étant configurés pour mesurer la distance séparant la cible 132 et le télémètre 130. Pour chacun des premier ou deuxième postes de contrôle du positionnement 50, 52, le nombre et le positionnement des télémètres 130 sont déterminés de manière à permettre aux télémètres 130 de déterminer la position de chaque panneau 18.1 à 18.6 dans un référentiel donné R. La position de chaque support de montage inférieur et supérieur 52, 54 étant connue dans le référentiel donné R et la position de chaque panneau 18.1 à 18.6 étant également connue dans le référentiel donné R, il est possible de déterminer la position de chaque panneau 18.1 à 18.6 par rapport à chaque support de montage inférieur ou supérieur 54, 56 et de l'ajuster grâce aux liaisons réglables 124 selon une position souhaitée.

Selon un mode de réalisation visible sur la figure 17A, le premier poste de jonction 42.1 des parois 20 comprend au moins deux têtes de soudure 134, 134' mobiles selon la direction de déplacement DD, une première tête de soudure 134 assurant la jonction des parois 20 du panneau inférieur 18.1 et du panneau latéral inférieur droit 18.2 ainsi qu'une deuxième tête de soudure 134' assurant la jonction des parois 20 du panneau inférieur 18.1 et du panneau latéral inférieur gauche 18.3.

Selon un mode de réalisation visible sur la figure 17B, le deuxième poste de jonction 46.1 comprend au moins deux têtes de soudure 136, 136' mobiles selon la direction de déplacement DD, une première tête de soudure 136 assurant la jonction des parois 20 du panneau supérieur 18.6 et du panneau latéral supérieur droit 18.4 ainsi qu'une deuxième tête de soudure 136' assurant la jonction des parois 20 du panneau supérieur 18.6 et du panneau latéral supérieur gauche 18.5.

Selon un mode de réalisation visible sur la figure 19, le poste de positionnement et de jonction 48 comprend au moins deux têtes de soudure 138, 138', mobiles selon la direction de déplacement DD, une première tête de soudure 138 assurant la jonction des parois 20 des panneaux latéraux droits supérieur et inférieur 18.2, 18.4 ainsi qu'une deuxième tête de soudure 138' assurant la jonction des parois 20 des panneaux latéraux gauches supérieur et inférieur 18.3, 18.5.

Bien entendu, l'invention n'est pas limitée à ces modes de réalisation pour les premier et deuxième postes de jonction 42.1, 46.1 des parois 20 et le poste de positionnement et de jonction 48. Ainsi, les têtes de soudure 134, 134', 136, 136', 138, 138' pourraient être remplacées par des effecteurs configurés pour la pose de rivets.

Les premier et deuxième postes de jonction 42.2, 46.2 des structures 12 et le poste de positionnement et de jonction 48 comprennent chacun au moins deux équipements automatisés 140, 140' configurés pour assurer la jonction des structures 12 entre elles. En variante, l'étape de jonction des structures 12 pourrait être semi-automatisée ou manuelle et réalisée, au moins en partie, par au moins un opérateur.

Le procédé d'assemblage d'un tronçon de fuselage 10 est maintenant décrit.

Les six panneaux 18.1 à 18.2 chacun équipés d'une ossature 28 sont stockés deux par deux dans trois conteneurs 30 positionnés dans la zone de stockage 96. Chacun des panneaux 18.1 à 18.6 et/ou chacune des ossatures 28 comprennent un identifiant et éventuellement au moins un marquage mentionnant au moins une donnée relative au panneau et/ou au tronçon de fuselage à réaliser.

L'unité de production 38 comprend au moins un lecteur d'identifiant relié à un poste de contrôle configuré pour contrôler les différents éléments de l'unité de production. Pour chaque panneau 18.1 à 18.6, la lecture de l'identifiant par le lecteur d'identifiant permet, de manière automatique et autonome, de déterminer le chariot de transport 98, 98' à utiliser pour transporter le panneau 18.1 à 18.6, le premier ou deuxième poste de positionnement 40, 44 vers lequel doit être acheminé le panneau 18.1 à 18.6, le support de montage inférieur ou supérieur 54, 56 auquel le panneau 18.1 à 18.2 est destiné, le réglage en longueur des supports de montage inférieur et supérieur 52, 54, le positionnement du panneau 18.1 à 18.6 sur le support de montage inférieur ou supérieur 54, 56...

Le transfert de chaque panneau 18.1 à 18.6 du conteneur 30 vers un chariot de transport 98, 98' peut être automatisé. De même, les déplacements de chaque chariot de transport 98, 98' de la zone de stockage 96 vers le premier ou deuxième poste de positionnement 40, 44 peuvent également être automatisés et contrôlés par un automate.

Au niveau du premier poste de positionnement 40, chaque chariot de transport 98, 98' est positionné par rapport au support de montage inférieur 54. Comme illustré sur la figure 11A, les chariots de transport 98, 98' sont positionnés de sorte que le panneau inférieur 18.1 soit positionné en dessous et à l'aplomb du support de montage inférieur 54 et les panneaux latéraux inférieurs droit et gauche 18.2, 18.3 de part et d'autre du panneau inférieur 18.1.

Les interfaces supports 110.4 à 110.6 sont positionnées dans une position rétractée correspondant à leur position lors du démoulage du tronçon de fuselage 10 à l'issue du procédé d'assemblage.

Comme illustré sur la figure 11B, le châssis 108 du support de montage inférieur 54 est translaté vers le bas jusqu'à ce que les interfaces supports 110.1 à 110.3 soient en contact avec les interfaces panneaux 32 du panneau inférieur 18.1. Le panneau inférieur 18.1 est alors solidarisé au support de montage inférieur 54.

Comme illustré sur la figure 11C, les panneaux latéraux inférieurs droit et gauche 18.2, 18.3 sont translatés vers le haut en utilisant les montants 102 télescopiques des chariots de transport 98 de manière à ce que les interfaces panneaux 32 desdits panneaux latéraux inférieurs droit et gauche 18.2, 18.3 soient sensiblement à la même hauteur que les interfaces supports 110.4 à 110.6 correspondantes. Les panneaux latéraux inférieurs droit et gauche 18.2, 18.3 sont alors solidarisés au support de montage inférieur 54.

Comme illustré sur la figure 11D, le châssis 108 est translaté vers le haut dans une position nominale correspondant à la position du châssis durant l'assemblage du tronçon du fuselage 10.

A titre d'exemple, on a représenté, sur la figure 3A, les positions des panneaux 18.1 à 18.3 avant leur chargement sur le support de montage inférieur 54, référencées A, B, C ; et les positions des mêmes panneaux 18.1 à 18.3 solidarisés au support de montage inférieur 54, référencées A1, B1, C1.

Au niveau du deuxième poste de positionnement 44, chaque chariot de transport 98, 98' est positionné par rapport au support de montage supérieur 56. Le panneau supérieur 18.6 est positionné sur le support de montage supérieur 56 par tout moyen approprié, en faisant coopérer les interfaces supports supérieures 122.1 à 122.3 avec les interfaces panneaux 32, puis le panneau supérieur 18.6 est solidarisé audit support de montage supérieur 56.

Les panneaux latéraux supérieurs droit et gauche 18.4, 18.5, positionnés sur des chariots de transport 98 disposés de part et d'autre du support de montage supérieur 56, sont translatés vers le haut en utilisant les montants 102 télescopiques des chariots de transport 98 de manière à ce que les interfaces panneaux 32 desdits panneaux latéraux supérieurs droit et gauche 18.4, 18.5 soient sensiblement à la même hauteur que les interfaces supports 122.4 à 122.6 correspondantes. Les panneaux latéraux supérieurs droit et gauche 18.4, 18.5 sont alors solidarisés au support de montage supérieur 56.

A titre d'exemple, on a représenté, sur la figure 3B, les positions des panneaux 18.4 à 18.6 avant leur chargement sur le support de montage supérieur 56, référencées D, E, F ; et les positions des mêmes panneaux 18.4 à 18.6 solidarisés au support de montage supérieur 56, référencées D1, E1, F1.

Pour chaque support de montage inférieur ou supérieur 54, 56, les panneaux 18.1 à 18.6 peuvent être pré-positionnés en utilisant les liaisons réglables 124.

Les deux supports de montage inférieur et supérieur 54, 56 sont déplacés jusqu'aux premier et deuxième postes de contrôle du positionnement 50, 52. Grâce aux valeurs mesurées par les télémètres 130 et/ou aux valeurs des efforts mesurées par les capteurs d'effort équipant les supports de montage inférieur et supérieur 54, 56, la position de chaque panneau 18.1 à 18.6 est corrigée grâce aux liaisons réglables 124. Cette opération de correction du positionnement peut être automatisée. Dans ce cas, les valeurs mesurées par les télémètres130 et/ou les valeurs des efforts mesurées par les capteurs d'effort sont transmises à un ordinateur configuré pour déterminer des valeurs de correction pour chacun des mouvements de translation selon les directions Tx, Ty, Tz de chaque liaison réglable 124 et pour transmettre ces valeurs de correction aux liaisons réglables 124 concernées, les liaisons réglables 124 étant configurées pour réaliser de manière autonome et automatique des mouvements de translation selon les directions Tx, Ty, Tz en fonction des valeurs de correction déterminées par l'ordinateur.

Une fois que les panneaux 18.1 à 18.6 sont correctement positionnés par rapport aux supports de montage inférieur et supérieur 54, 56, ces derniers sont déplacés jusqu'aux premier et deuxième postes de jonction 42.1, 46.1 des parois 20. Au niveau du premier poste de jonction 42.1, la jonction des parois 20 du panneau inférieur 18.1 et du panneau latéral inférieur droit 18.2 ainsi que la jonction des parois 20 du panneau inférieur 18.1 et du panneau latéral inférieur gauche 18.3 sont réalisées par soudage ou rivetage. Au niveau du deuxième poste de jonction 46.1, la jonction des parois 20 du panneau supérieur 18.6 et du panneau latéral supérieur droit 18.4 ainsi que la jonction des parois 20 du panneau supérieur 18.6 et du panneau latéral supérieur gauche 18.5 sont réalisées par soudage ou rivetage.

Lorsque les jonctions des parois 20 des panneaux 18.1 à 18.6 ont été réalisées, les supports de montage inférieur et supérieur 54, 56 sont déplacés jusqu'aux premier et deuxième postes de jonction 42.2, 46.2 des structures 12. Au niveau du premier poste de jonction 42.2, la jonction des structures 12 du panneau inférieur 18.1 et du panneau latéral inférieur droit 18.2 ainsi que la jonction des structures 12 du panneau inférieur 18.1 et du panneau latéral inférieur gauche 18.3 sont réalisées par soudage ou rivetage. Au niveau du deuxième poste de jonction 46.2 des structures 12, la jonction des structures 12 du panneau supérieur 18.6 et du panneau latéral supérieur droit 18.4 ainsi que la jonction des structures 12 du panneau supérieur 18.6 et du panneau latéral supérieur gauche 18.5 sont réalisées par soudage ou rivetage.

Lorsque les jonctions des structures 12 des panneaux ont été réalisées, les supports de montage inférieur et supérieur 54, 56 sont déplacés jusqu'au poste de positionnement et de jonction 48. Pour cela, le support de montage supérieur 56 est déplacé jusqu'au deuxième pont tournant aval 90' du deuxième chemin 60, comme illustré sur la figure 18A. Le deuxième pont tournant aval 90' est translaté vers le haut grâce au deuxième ascenseur 94' de manière à être positionné approximativement à la même hauteur que le premier chemin 58, comme illustré sur la figure 18B. Le deuxième pont tournant aval 90' est pivoté à 90° de manière à ce que le support de montage supérieur 56 puisse se déplacer du deuxième pont tournant aval 90' du deuxième chemin 60 vers le premier pont tournant aval 90 du premier chemin 58 en empruntant le chemin de transfert 92, comme illustré sur la figure 18C. Le premier pont tournant aval 90 est pivoté de manière à ce que le support de montage supérieur 56 puisse se déplacer sur le premier chemin 58 afin d'atteindre le poste de positionnement et de jonction 48, comme illustré sur la figure 18D.

Lorsque le support de montage supérieur 56 a atteint le poste de positionnement et de jonction 48, il est positionné au-dessus du support de montage inférieur 54, comme illustré sur la figure 18E. La partie supérieure du tronçon 36, composée du panneau supérieur 18.6 et des panneaux latéraux supérieurs droit et gauche 18.4, 18.5, est alors positionnée par rapport à la partie inférieure du tronçon 34 composée du panneau inférieur 18.1 et des panneaux latéraux inférieurs droit et gauche 18.2, 18.3 en agissant de manière coordonnée sur les liaisons réglables 124 du support de montage supérieur 56 et/ou sur le système de déplacement 114, comme illustré sur la figure 18E.

Lorsque la partie supérieure du tronçon 36 est correctement positionnée par rapport à la partie inférieure du tronçon 34, la jonction entre les panneaux latéraux droits supérieur et inférieur 18.2, 18.4 et la jonction entre les panneaux latéraux gauches supérieur et inférieur 18.3, 18.5 sont réalisées tant au niveau des parois 20 que des structures 12, comme illustré sur la figure 19.

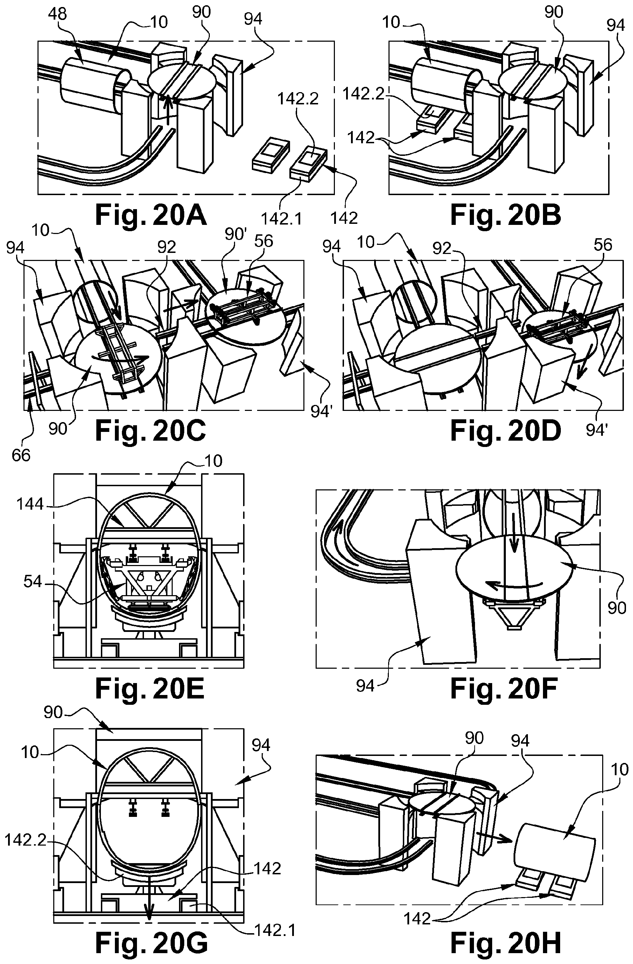

Le tronçon du fuselage 10 réalisé est évacué grâce à au moins un chariot 142. Comme illustré sur les figures 20A et 20B, chaque chariot 142 comprend une base roulante 142.1 et une série de berceaux palonnés 142.2 configurés pour recevoir le tronçon de fuselage 10 et pour se déplacer verticalement par rapport à la base roulante 142.1, comme illustré sur la figure 20G. Pour évacuer le tronçon de fuselage 10, les chariots 142 sont positionnés sous le tronçon de fuselage 10 et leurs berceaux 142.2 sont déplacés vers le haut de manière à venir en contact avec le tronçon de fuselage 10, comme illustré sur la figure 20B.

Le support de montage supérieur 56 est désolidarisé des panneaux 18.4 à 18.6 du tronçon de fuselage 10 puis il est transféré vers le premier pont tournant aval 90, puis vers le chemin de transfert 92 après pivotement du premier pont tournant aval 90, puis vers le deuxième ascenseur 94' et enfin vers la deuxième portion de retour 72 du deuxième chemin 60 après la descente du deuxième ascenseur 94', comme illustré sur les figures 20C et 20D. En variante, les ossatures 28 sont détachées des panneaux 18.4 à 18.6, puis le support de montage supérieur 56 supportant les ossatures 28 est transféré vers la deuxième portion de retour 72 du deuxième chemin 60, comme précédemment décrit.

Au moins un renfort 144 peut être mis en place pour rigidifier la partie supérieure du tronçon 36, comme illustré sur la figure 20E. Le support de montage inférieur 54 est désolidarisé des panneaux 18.1 à 18.3 du tronçon de fuselage 10 puis il est transféré vers le premier pont tournant aval 90, puis vers la première portion de retour 66 du premier chemin 58 après pivotement du premier pont tournant aval 90, comme illustré sur la figure 20F. En variante, les ossatures 28 reliées au support de montage inférieur 54 sont détachées des panneaux 18.1 à 18.3 et le support de montage inférieur 54 auquel sont reliées les ossatures 28 est transféré vers la première portion de retour 66 du premier chemin 58, comme précédemment décrit.

Après avoir déplacé les berceaux 142.2 des chariots 142 vers le bas, comme illustré sur la figure 20G, le premier pont tournant aval 90 est déplacé vers le haut grâce au premier ascenseur 94 pour permettre aux chariots 142 supportant le tronçon de fuselage 10 de passer sous le premier pont tournant aval 90 et d'évacuer le tronçon de fuselage 10, comme illustré sur la figure 20H. Selon ce mode de réalisation, le premier pont tournant aval 90 assure la fonction de la section mobile, configurée pour occuper une position continue ou une position décalée dans laquelle elle ouvre la boucle formée par le premier chemin 58 pour permettre d'évacuer le tronçon de fuselage réalisé.

Le fait de réaliser le tronçon de fuselage 10 en assemblant des parties inférieure et supérieure du tronçon 34, 36, chacune d'elles étant obtenue en assemblant au moins deux panneaux, permet quel que soit la section du tronçon de fuselage (et donc la famille d'avions) de pouvoir utiliser le même procédé d'assemblage et la même unité de production. Ainsi, une même unité de production peut être utilisée pour assembler des tronçons de fuselage de différentes familles d'avions.

Grâce à leur conception, les supports de montage supérieur et inférieur 56, 54 sont polyvalents et peuvent être utilisés pour assembler les panneaux de tronçons de fuselage 10 quelle que soit la section dudit tronçon de fuselage. Grâce à leurs liaisons réglables 124, les supports de montage supérieur et inférieur 54, 56 permettent rapidement de positionner les panneaux entre eux.

Le procédé d'assemblage selon l'invention permet de pouvoir aisément automatiser les différentes étapes de l'assemblage d'un tronçon de fuselage, ce qui se traduit par un gain de productivité.

## Revendications

1. Procédé d'assemblage d'un tronçon de fuselage (10) à partir de plusieurs panneaux (18.1 à 18.6), le procédé comprenant des étapes de positionnement et de jonction d'au moins deux panneaux (18.1 à 18.3) de manière à obtenir une partie inférieure du tronçon (34), lesdits panneaux (18.1 à 18.3) de la partie inférieure du tronçon (34) étant solidarisés à un support de montage inférieur (54) configuré pour se déplacer le long d'un premier chemin (58) ; des étapes de positionnement et de jonction d'au moins deux panneaux (18.4 à 18.6) de manière à obtenir une partie supérieure du tronçon (36), lesdits panneaux (18.4 à 18.6) de la partie supérieure du tronçon (36) étant solidarisés à un support de montage supérieur (56) configuré pour se déplacer le long d'un deuxième chemin (60) ; une étape de déplacement d'au moins un des supports de montage inférieur ou supérieur (54, 56) de manière à ce que le support de montage supérieur (56) soit positionné au-dessus du support de montage inférieur (54) ; des étapes de positionnement et de jonction des parties inférieure et supérieure du tronçon (34, 36) de manière à obtenir le tronçon de fuselage (10) ainsi que des étapes de démoulage et d'évacuation du tronçon de fuselage (10) réalisé.

2. Procédé d'assemblage d'un tronçon de fuselage (10) selon la revendication 1, dans lequel le procédé comprend, pour chaque support de montage inférieur ou supérieur (54, 56), une étape de contrôle du positionnement de chaque panneau (18.1 à 18.6) et une étape de correction du positionnement de chaque panneau (18.1 à 18.6) grâce à une liaison, reliant chaque panneau (18.1 à 18.6) et l'un des supports de montage inférieur et supérieur (54, 56), configurée pour permettre d'ajuster le positionnement de chaque panneau (18.1 à 18.6) selon une configuration souhaitée et pour immobiliser les panneaux (18.1 à 18.6) par rapport aux supports de montage inférieur et supérieur (54, 56) selon la configuration souhaitée.

3. Procédé d'assemblage d'un tronçon de fuselage (10) selon la revendication précédente, dans lequel chaque panneau (18.1 à 18.6) est relié de manière démontable à une ossature (28) équipée d'au moins trois interfaces panneaux (32), chaque support de montage inférieur ou supérieur (54, 56) comprend au moins un châssis (108, 120) mobile le long du premier ou deuxième chemin (58, 60) et, pour chaque panneau (18.1 à 18.6), au moins trois interfaces supports (110.1 à 110.6, 122.1 à 122.6) reliées chacune par l'intermédiaire d'une liaison réglable (124) selon trois directions orthogonales (Tx, Ty, Tz) au châssis (108, 120) et dans lequel l'étape de positionnement de chaque panneau (18.1 à 18.6) sur l'un des supports de montage inférieur et supérieur (54, 56) consiste à faire coopérer chaque interface panneau (32) avec l'une des interfaces supports (110.1 à 110.6, 122.1 à 122.6) dans une position centrée de manière à ce que la position de chaque panneau (18.1 à 18.6) par rapport à l'un des supports de montage inférieur et supérieur (54, 56) soit connue.

4. Procédé d'assemblage d'un tronçon de fuselage (10) selon l'une des revendications précédentes, dans lequel le support de montage supérieur (56) est transféré sur le premier chemin (58) au niveau duquel les étapes de positionnement et de jonction des parties inférieure et supérieure du tronçon (34, 36) sont réalisées.

5. Procédé d'assemblage d'un tronçon de fuselage (10) selon l'une des revendications précédentes, dans lequel les premier et deuxième chemins (58, 60) décrivent chacun une boucle fermée et dans lequel la boucle, formée par le premier ou deuxième chemin (58, 60) au niveau duquel est réalisée l'étape de positionnement et de jonction des parties inférieure et supérieure du tronçon (34, 36), est ouverte pour permettre l'étape d'évacuation du tronçon de fuselage (10) réalisé.

6. Outillage pour la mise en œuvre du procédé d'assemblage d'un tronçon de fuselage selon l'une des revendications 1 à 5, l'outillage comportant un support de montage inférieur ou supérieur (54, 56) comprenant un châssis (108, 110) et, pour chaque panneau (18.1, 18.6), au moins trois interfaces supports (110.1 à 110.6, 122.1 à 122.6) reliées chacune au châssis (108, 120) par l'intermédiaire d'une liaison réglable (124) selon trois directions orthogonales (Tx, Ty, Tz) ainsi que, pour chaque panneau (18.1, à 18.6), une ossature (28) configurée pour être reliée de manière démontable au panneau (18.1 à 18.6) et limiter ses déformations lors d'un transport, équipée d'au moins trois interfaces panneaux (32) configurées chacune pour coopérer avec une interface support (110.1 à 110.6, 122.1 à 122.6) dans une position centrée.

7. Outillage selon la revendication 6, dans lequel le châssis (108, 120) est télescopique et comprend un châssis avant (108.1), un châssis arrière (108.2) ainsi qu'une liaison télescopique (112), reliant les châssis avant et arrière (108.1, 108.2), configurée pour occuper un état mobile dans lequel la liaison télescopique (112) permet d'écarter plus ou moins les châssis avant et arrière (108.1, 108.2) et un état bloqué dans lequel la liaison télescopique (112) maintient les châssis avant et arrière (108.1, 108.2) dans une position donnée.

8. Outillage selon la revendication 6 ou 7, dans lequel le support de montage inférieur ou supérieur (54, 56) comprend au moins un système de déplacement vertical (114) configuré pour déplacer le châssis (108, 120) verticalement.

9. Outillage selon la revendication précédente, dans lequel chaque système de déplacement vertical (114) comprend un corps (116), auquel sont reliés deux systèmes de guidage (84, 86) du support de montage inférieur ou supérieur (54, 56) par rapport au premier ou deuxième chemin (58, 60), ainsi qu'au moins une glissière (118) verticale configurée pour relier le corps (116) au châssis (108, 120).

10. Outillage selon l'une des revendications 6 à 9, dans lequel chaque support de montage inférieur ou supérieur (54, 56) comprend des capteurs d'efforts permettant de déterminer au moins un effort exercé par chaque panneau (18.1 à 18.6) sur le support de montage inférieur ou supérieur (54, 56).

11. Outillage selon l'une des revendications 6 à 10, dans lequel, pour au moins certains couples d'interfaces support et panneau, l'interface support (110.1 à 110.6, 122.1 à 122.6) et/ou l'interface panneau (32) comprend un système d'immobilisation dans la position centrée.

12. Outillage selon l'une des revendications 6 à 11, dans lequel chaque couple d'interfaces support et panneau comprend une partie mâle (M) et une partie femelle (F) comportant une butée, ladite partie mâle étant configurée pour être introduite selon un sens d'introduction (SI) dans la partie femelle (F) jusqu'à venir en contact avec la butée dans la position centrée, les parties mâle (M) et femelle (F) étant configurées de sorte que, lorsque la partie mâle (M) est dans la position centrée, la partie mâle (M) soit immobilisée par rapport à la partie femelle (F) dans un plan perpendiculaire au sens d'introduction (SI) et ne puisse pas se translater selon le sens d'introduction (SI).

13. Unité de production pour la mise en œuvre du procédé d'assemblage d'un tronçon de fuselage selon l'une des revendications 1 à 5, l'unité de production comprenant un premier chemin (58) comportant un premier poste de positionnement (40) des panneaux (18.1 à 18.3) et un premier poste de jonction (42) des panneaux (18.1 à 18.3), un outillage comportant un support de montage inférieur (54), selon l'une des revendications 6 à 12, déplaçable le long du premier chemin du premier poste de positionnement (40) des panneaux (18.1 à 18.3) jusqu'au premier poste de jonction (42) des panneaux (18.1 à 18.3) ; un deuxième chemin (60) comportant un deuxième poste de positionnement (44) des panneaux (18.4 à 18.6) et un deuxième poste de jonction (46) des panneaux (18.4 à 18.6), ainsi qu'un outillage comportant un support de montage supérieur (56), selon l'une des revendications 6 à 12, déplaçable le long du deuxième chemin du deuxième poste de positionnement (44) des panneaux (18.4 à 18.6) jusqu'au deuxième poste de jonction (46) des panneaux (18.4 à 18.6), un poste de transfert (62) permettant aux supports de montage inférieur (54) ou supérieur (56) de passer d'un chemin à l'autre de manière à atteindre un poste de positionnement et de jonction (48) des première et deuxième parties du tronçon (34, 36).

14. Unité de production selon la revendication précédente, dans laquelle le poste de positionnement et de jonction (48) des parties inférieure et supérieure du tronçon (34, 36) est positionné au niveau du premier chemin (58) ; le premier chemin (58) est configuré pour permettre à chaque support de montage inférieur (54) de se déplacer au-dessous du premier chemin (58) et à chaque support de montage supérieur (56) de se déplacer au-dessus d'au moins une partie du premier chemin (58) et le deuxième chemin (60) est configuré pour permettre à chaque support de montage supérieur (56) de se déplacer au-dessus du deuxième chemin (60).

15. Unité de production selon la revendication 13 ou 14, dans laquelle le premier chemin (58) décrit une boucle fermée pour permettre à tous les supports de montage inférieurs (54) de revenir, à l'issue de l'assemblage d'un tronçon de fuselage (10), au premier poste de positionnement (40) des panneaux (18.1 à 18.3) ; et le deuxième chemin (60) décrit une boucle fermée pour permettre à tous les supports de montage supérieurs (56) de revenir, à l'issue de l'assemblage d'un tronçon de fuselage (10), au deuxième poste de positionnement (44) des panneaux (18.1 à 18.3).

16. Unité de production selon l'une des revendications 13 à 15, dans laquelle le poste de transfert (62) comprend des premier et deuxième ponts tournants avals (90, 90') prévus au niveau des premier et deuxième chemins (58, 60), un chemin de transfert (92) reliant les premier et deuxième ponts tournants avals (90, 90') et au moins un ascenseur (94) pour au moins l'un des premier et deuxième ponts tournants avals (90, 90').

17. Unité de production selon la revendication 16, dans laquelle le chemin de transfert (92) est à la même hauteur que le premier chemin (58) et le poste de transfert (62) comprend un premier ascenseur (94) pour le premier pont tournant aval (90) du premier chemin (58) ainsi qu'un deuxième ascenseur (94') pour le deuxième pont tournant aval (90') du deuxième chemin (60).

## Patentansprüche

1. Verfahren zum Zusammensetzen eines Rumpfabschnitts (10) aus mehreren Paneelen (18.1 bis 18.6), wobei das Verfahren umfasst: Schritte des Positionierens und Verbindens von wenigstens zwei Paneelen (18.1 bis 18.3), um einen unteren Teil des Abschnitts (34) zu erhalten, wobei die Paneeln (18.1 bis 18.3) des unteren Teils des Abschnitts (34) an einer unteren Montagehalterung (54) befestigt sind, die dazu eingerichtet ist, sich entlang einer ersten Bahn (58) zu bewegen; Schritte des Positionierens und Verbindens von wenigstens zwei Paneelen (18.4 bis 18.6), um einen oberen Teil des Abschnitts (36) zu erhalten, wobei die Paneele (18.4 bis 18.6) des oberen Teils des Abschnitts (36) an einer oberen Montagehalterung (56) befestigt sind, die dazu eingerichtet ist, sich entlang einer zweiten Bahn (60) zu bewegen; einen Schritt des Bewegens wenigstens einer der unteren oder oberen Montagehalterungen (54, 56), so dass die obere Montagehalterung (56) über der unteren Montagehalterung (54) positioniert ist; Schritte des Positionierens und Verbindens der unteren und oberen Teile des Abschnitts (34, 36), um den Rumpfabschnitt (10) zu erhalten, sowie Schritte des Entformens und Abtransports des hergestellten Rumpfabschnitts (10).

2. Verfahren zum Zusammenbauen eines Rumpfabschnitts (10) nach Anspruch 1, bei dem das Verfahren für jede untere oder obere Montagehalterung (54, 56) einen Schritt des Steuerns der Positionierung jedes Paneels (18.1 bis 18.6) aufweist und einen Schritt des Korrigierens der Positionierung jedes Paneels (18.1 bis 18.6) durch ein Verbindungsglied, das jedes Paneel (18.1 bis 18.6) und eine der unteren und oberen Montagehalterungen (54, 56) verbindet und dazu eingerichtet ist, das Einstellen der Positionierung jedes Paneels (18.1 bis 18.6) auf eine gewünschte Konfiguration zu ermöglichen und die Paneele (18.1 bis 18.6) relativ zu den unteren und oberen Montagehalterung (54, 56) gemäß der gewünschten Konfiguration zu fixieren.

3. Verfahren zum Zusammenbauen eines Rumpfabschnitts (10) nach dem vorhergehenden Anspruch, bei dem jedes Paneel (18.1 bis 18.6) lösbar mit einem Gerüst (28) verbunden ist, das mit wenigstens drei Paneelnschnittstellen (32) ausgestattet ist, bei dem jede untere oder obere Montagehalterung (54, 56) wenigstens ein entlang des ersten oder zweiten Wegs (58, 60) bewegliches Gestell (108, 120) aufweist und für jedes Paneel (18.1 bis 18.6) wenigstens drei Trägerschnittstellen (110.1 bis 110.6, 122.1 bis 122.6) aufweist, die jeweils über eine in drei orthogonale Richtungen (Tx, Ty, Tz) verstellbare Anschlüsse (124) mit dem Gestell (108, 120) verbunden sind, und bei dem der Schritt des Positionierens jedes Paneels (18.1 bis 18.6) auf einer der unteren und oberen Montagehalterungen (54, 56) darin besteht, dass jede Paneelnschnittstelle (32) mit einer der Trägerschnittstellen (110.1 bis 110.6, 122.1 bis 122.6) in einer zentrierten Position zusammenwirkt, so dass die Position jeder Paneel (18.1 bis 18.6) In Bezug auf eine der unteren und oberen Befestigungshalterungen (54, 56) bekannt ist.

4. Verfahren zum Zusammenbauen eines Rumpfabschnitts (10) nach einem der vorhergehenden Ansprüche, bei dem dieobere Montagehalterung (56) auf der ersten Bahn (58) übertragen wird, an der die Schritte des Positionierens und der Verbindung des unteren und oberen Teils des Abschnitts (34, 36) ausgeführt werden.

5. Verfahren zum Zusammenbauen eines Rumpfabschnitts (10) nach einem der vorhergehenden Ansprüche, bei dem die erste und die zweite Bahn (58, 60) jeweils eine geschlossene Schleife beschreiben und bei dem die Schleife, die durch die erste oder zweite Bahn (58, 60) gebildet ist und bei der der Schritt des Positionierens und Verbindens der unteren und oberen Teile des Abschnitts (34, 36) ausgeführt wird, offen ist, um den Schritt des Abtransports des Rumpfabschnitts (10) zu ermöglichen.

6. Werkzeug zur Durchführung des Verfahrens zum Zusammenbau eines Rumpfabschnitts nach einem der Ansprüche 1 bis 5, wobei das Werkzeug eine untere oder obere Montagehalterung (54, 56) aufweist, die ein Gestell (108, 110) aufweist und für jedes Paneel (18.1, 18.6) wenigstens drei Trägerschnittstellen (110.1 bis 110.6, 122.1 bis 122.6) hat, die jeweils über einen in drei orthogonale Richtungen (Tx, Ty, Tz) verstellbaren Anschluss (124) mit dem Gestell (108, 120) verbunden sind, sowie für jedes Paneel (18.1, bis 18.6) ein Gerüst (28) aufweist, das lösbar mit dem Paneel (18.1 bis 18.6) verbunden werden kann und das dessen Verformungen während des Transports begrenzt und das mit wenigstens drei Paneelschnittstellen (32) ausgestattet ist, die jeweils dazu eingerichtet sind, mit einer Trägerschnittstelle (110.1 bis 110.6, 122.1 bis 122.6) in einer zentrierten Position zusammenzuwirken.

7. Werkzeug nach Anspruch 6, bei dem das Gestell (108, 120) teleskopierbar ist und einen vorderen Rahmen (108.1), einen hinteren Rahmen (108.2) und eine den vorderen und hinteren Rahmen (108.1, 108.2) verbindende Teleskopstange (112) aufweist, die dazu eingerichtet ist, einen beweglichen Zustand einzunehmen, in dem es die Teleskopverbindung (112) ermöglicht, den vorderen und den hinteren Rahmen (108.1, 108.2) mehr oder weniger voneinander zu entfernen, und einen blockierten Zustand einzunehmen, in dem die Teleskopverbindung (112) den vorderen und hinteren Rahmen (108.1, 108.2) in einer gegebenen Position hält.

8. Werkzeug nach Anspruch 6 oder 7, bei dem die untere oder obere Montagehalterung (54, 56) wenigstens ein vertikales Bewegungssystem (114) aufweist, das dazu eingerichtet ist, das Gestell (108, 120) vertikal zu bewegen.

9. Werkzeug nach dem vorhergehenden Anspruch, bei dem jedes vertikale Bewegungssystem (114) einen Körper (116) aufweist, an dem zwei Führungssysteme (84, 86) der unteren oder oberen Montagehalterung (54, 56) für die erste oder zweite Bahn (58, 60) angebracht sind, sowie wenigstens eine vertikale Gleitvorrichtung (118) aufweist, die dazu eingerichtet ist, den Körper (116) mit dem Gestell (108, 120) zu verbinden.

10. Werkzeug nach einem der Ansprüche 6 bis 9, bei dem jede untere oder obere Montagehalterung (54, 56) Kraftsensoren zum Ermitteln wenigstens einer von jedem Paneel (18.1 bis 18.6) auf die untere oder obere Montagehalterung (54, 56) ausgeübten Kraft aufweist.

11. Werkzeug nach einem der Ansprüche 6 bis 10, bei dem für zumindest bestimmte Paare von Träger- und Paneelnschnittstellen die Trägerschnittstelle (110.1 bis 110.6, 122.1 bis 122.6) und/oder die Paneelnschnittstelle (32) ein System zum Fixieren in zentrierter Position aufweist.

12. Werkzeug nach einem der Ansprüche 6 bis 11, bei dem jedes Paar von Träger- und Paneelnschnittstellen ein männliches Teil (M) und ein weibliches Teil (F) mit einem Anschlag aufweist, wobei das männliche Teil dazu eingerichtet ist, in das weibliche (F) in Einführrichtung (SI) bis zum Anschlag in der zentrierten Position eingeführt zu werden, wobei das männliche Teil (M) und das weiblichen Teil (F) so eingerichtet sind, dass in der zentrierten Position das männliche Teil (M) gegenüber dem weiblichen Teil (F) in einer zur Einführrichtung (SI) rechtwinklingen Ebene fixiert ist und in die Einführrichtung (SI) nicht verschiebbar ist.

13. Fertigungseinheit zur Ausführung des Verfahrens zum Zusammenbau eines Rumpfabschnitts nach einem der Ansprüche 1 bis 5, wobei die Fertigungseinheit eine erste Bahn (58) mit einer ersten Positionierstation (40) für die Paneele (18.1 bis 18.3) und mit einer ersten Verbindungsstation (42) für die Paneele (18.1 bis 18.3) sowie ein Werkzeug mit einer unteren Montagehalterung (54) nach einem der Ansprüche 6 bis 12 aufweist, die entlang des ersten Weges von der ersten Positionierstation (40) für die Paneele (18.1 bis 18.3) zur ersten Verbindungsstation (42) für die Paneele (18.1 bis 18.3) verfahrbar ist, und eine zweite Bahn (60) mit einer zweiten Positionierstation (44) für die Paneele (18.4 bis 18.6) und einer zweiten Verbindungsstation (46) für die Paneele (18.4 bis 18.6) sowie ein Werkzeug mit einer oberen Montagehalterung (56) nach einem der Ansprüche 6 bis 12 aufweist, die entlang des zweiten Weges von der zweiten Positionierstation (44) für die Paneele (18.4 bis 18.6) zur zweiten Verbindungsstation (46) für die Paneele (18.4 bis 18.6) verfahrbar ist, und eine Übergabestation (62) aufweist, die es den unteren (54) oder oberen (56) Montagehalterungen ermöglicht, sich von einer Bahn zur anderen zu bewegen, um eine Positionier- und Verbindungsstation (48) des ersten und zweiten Teils des Abschnitts (34, 36) zu erreichen.

14. Produktionseinheit nach dem vorhergehenden Anspruch, bei der die Positionier- und Verbindungsstation (48) des unteren und oberen Teils des Abschnitts (34, 36) im Bereich der ersten Bahn (58) angeordnet ist und bei der die erste Bahn (58) so eingerichtet ist, dass sich jede untere Montagehalterung(54) unter der ersten Bahn (58) bewegen kann und sich jede obere Montagehalterung (56) über zumindest einem Teil der ersten Bahn (58) bewegen kann, und bei der die zweite Bahn (60) so eingerichtet ist, dass diese jeder oberen Montagehalterung (56) ermöglicht, sich über der zweiten Bahn (60) zu bewegen.

15. Produktionseinheit nach Anspruch 13 oder 14, bei der der erste Weg (58) eine geschlossene Schleife beschreibt, um zu ermöglichen, dass alle unteren Montagehalterungen (54) nach der Montage eines Rumpfabschnitts (10) an die erste Positionierstation (40) der Paneele (18.1 bis 18.3) zurückkehren, und bei der der zweite Weg (60) eine geschlossene Schleife beschreibt, um zu ermöglichen, dass alle oberen Montagehalterungen (56) nach der Montage eines Abschnitts des Rumpfes (10) zur zweiten Positionierstation (44) der Paneele (18.1 bis 18.3) zurückkehren.

16. Produktionseinheit nach einem der Ansprüche 13 bis 15, bei der die Übergabestation (62) erste und zweite nachgeordnete Drehbrücken (90, 90') aufweist, die im Bereich der ersten und zweiten Bahn (58, 60) vorgesehen sind, und eine Übergabebahn (92) zum Verbinden der ersten und zweiten nachgeordneten Drehbrücken (90, 90') und wenigstens einen Aufzug (94) für wenigstens eine der ersten und zweiten nachgeordneten Drehbrücken (90, 90') aufweist.

17. Produktionseinheit nach Anspruch 16, bei der die Übergabebahn (92) auf der gleichen Höhe wie die erste Bahn (58) liegt und die Übergabestation (62) einen ersten Aufzug (94) für die erste nachgeordnete Drehbrücke (90) der ersten Bahn (58) sowie einen zweiten Aufzug (94') für die zweite nachgeordnete Drehbrücke (90') der zweiten Bahn (60) aufweist.

## Claims

1. A method for assembling a fuselage section (10) from several panels (18.1 to 18.6), the method comprising steps of positioning and of joining at least two panels (18.1 to 18.3) so as to obtain a lower part of the section (34), said panels (18.1 to 18.3) of the lower part of the section (34) being secured to a lower mounting support (54) configured to be displaced along a first path (58); steps of positioning and of joining at least two panels (18.4 to 18.6) so as to obtain an upper part of the section (36), said panels (18.4 to 18.6) of the upper part of the section (36) being secured to an upper mounting support (56) configured to be displaced along a second path (60); a step of displacement of at least one of the lower or upper mounting supports (54, 56) so that the upper mounting support (56) is positioned above the lower mounting support (54); steps of positioning and of joining the lower and upper parts of the section (34, 36) so as to obtain the fuselage section (10) and steps of mold-stripping and of discharging of the fuselage section (10) produced.

2. The method for assembling a fuselage section (10) as claimed in claim 1, wherein the method comprises, for each lower or upper mounting support (54, 56), a step of checking of the positioning of each panel (18.1 to 18.6) and a step of correcting the positioning of each panel (18.1 to 18.6) by virtue of a link, linking each panel (18.1 to 18.6) and one of the lower and upper mounting supports (54, 56), configured to make it possible to adjust the positioning of each panel (18.1 to 18.6) according to a desired configuration and to immobilize the panels (18.1 to 18.6) with respect to the lower and upper mounting supports (54, 56) according to the desired configuration.

3. The method for assembling a fuselage section (10) as claimed in the preceding claim, wherein each panel (18.1 to 18.6) is removably linked to a framework (28) equipped with at least three panel interfaces (32), wherein each lower or upper mounting support (54, 56) comprises at least one frame (108, 120) that is mobile along the first or second path (58, 60) and, for each panel (18.1 to 18.6), at least three support interfaces (110.1 to 110.6, 122.1 to 122.6) each linked via a link (124) that is adjustable according to three orthogonal directions (Tx, Ty, Tz) to the frame (108, 120) and wherein the step of positioning of each panel (18.1 to 18.6) on one of the lower and upper mounting supports (54, 56) consists in making each panel interface (32) cooperate with one of the support interfaces (110.1 to 110.6, 122.1 to 122.6) in a centered position so that the position of each panel (18.1 to 18.6) with respect to one of the lower and upper mounting supports (54, 56) is known.

4. The method for assembling a fuselage section (10) as claimed in one of the preceding claims, wherein the upper mounting support (56) is transferred on the first path (58) where the steps of positioning and of joining of the lower and upper parts of the section (34, 36) are performed.

5. The method for assembling a fuselage section (10) as claimed in one of the preceding claims, wherein the first and second paths (58, 60) each describe a closed loop and wherein the loop, formed by the first or second path (58, 60) where the step of positioning and of joining of the lower and upper parts of the section (34, 36) is performed, is open to allow the step of discharging of the fuselage section (10) produced.

6. A gear for implementing the method for assembling a fuselage section as claimed in one of claims 1 to 5, the gear comprising a lower or upper mounting support (54, 56) comprising a frame (108, 110) and, for each panel (18.1, 18.6), at least three support interfaces (110.1 to 110.6, 122.1 to 122.6) each linked to the frame (108, 120) via a link (124) that is adjustable according to three orthogonal directions (Tx, Ty, Tz) and, for each panel (18.1 to 18.6), a framework (28) configured to be removably linked to the panel (18.1 to 18.6) and limit the deformations thereof during transportation, equipped with at least three panel interfaces (32) each configured to cooperate with a support interface (110.1 to 110.6, 122.1 to 122.6) in a centered position.

7. The gear as claimed in claim 6, wherein the frame (108, 120) is telescopic and comprises a front frame (108.1), a rear frame (108.2) and a telescopic link (112), linking the front and rear frames (108.1, 108.2), configured to occupy a mobile state in which the telescopic link (112) makes it possible to increase or reduce the separation of the front and rear frames (108.1, 108.2) and a blocked state in which the telescopic link (112) holds the front and rear frames (108.1, 108.2) in a given position.

8. The gear as claimed in claim 6 or 7, wherein the lower or upper mounting support (54, 56) comprises at least one vertical displacement system (114) configured to displace the frame (108, 120) vertically.

9. The gear as claimed in the preceding claim, wherein each vertical displacement system (114) comprises a body (116), to which are linked two guiding systems (84, 86) for the lower or upper mounting support (54, 56) with respect to the first or second path (58, 60), and at least one vertical runner (118) configured to link the body (116) to the frame (108, 120).

10. The gear as claimed in one of claims 6 to 9, wherein each lower or upper mounting support (54, 56) comprises load sensors making it possible to determine at least one stress exerted by each panel (18.1 to 18.6) on the lower or upper mounting support (54, 56).

11. The gear as claimed in one of claims 6 to 10, wherein, for at least some pairs of support and panel interfaces, the support interface (110.1 to 110.6, 122.1 to 122.6) and/or the panel interface (32) comprises a system for immobilization in the centered position.

12. The gear as claimed in one of claims 6 to 11, wherein each pair of support and panel interfaces comprises a male part (M) and a female part (F) comprising an abutment, said male part being configured to be introduced in a direction of introduction (SI) into the female part (F) until it comes into contact with the abutment in the centered position, the male (M) and female (F) parts being configured so that, when the male part (M) is in the centered position, the male part (M) is immobilized with respect to the female part (F) in a plane at rightangles to the direction of introduction (SI) and cannot be translated in the direction of introduction (SI).

13. A production unit for implementing the method for assembling a fuselage section as claimed in one of claims 1 to 5, the production unit comprising a first path (58) comprising a first positioning station (40) for the panels (18.1 to 18.3) and a first joining station (42) for the panels (18.1 to 18.3), a gear comprising a lower mounting support (54), as claimed in one of claims 6 to 12, being displaced along the first path from the first positioning station (40) for the panels (18.1 to 18.3) to the first joining station (42) for the panels (18.1 to 18.3); a second path (60) comprising a second positioning station (44) for the panels (18.4 to 18.6) and a second joining station (46) for the panels (18.4 to 18.6), and a gear comprising an upper mounting support (56), as claimed in one of claims 6 to 12, being displaced along the second path from the second positioning station (44) for the panels (18.4 to 18.6) to the second joining station (46) for the panels (18.4 to 18.6), a transfer station (62) allowing the lower (54) or upper (56) mounting supports from switching from one path to the other so as to reach a positioning and joining station (48) for the first and second parts of the section (34, 36).

14. The production unit as claimed in the preceding claim, wherein the positioning and joining station (48) for the lower and upper parts of the section (34, 36) is positioned on the first path (58); wherein the first path (58) is configured to allow each lower mounting support (54) to be displaced under the first path (58) and each upper mounting support (56) to be displaced over at least a part of the first path (58) and wherein the second path (60) is configured to allow each upper mounting support (56) to be displaced over the second path (60).

15. The production unit as claimed in claim 13 or 14, wherein the first path (58) describes a closed loop to allow all the lower mounting supports (54) to return, after the assembly of a fuselage section (10), to the first positioning station (40) for the panels (18.1 to 18.3); and wherein the second path (60) describes a closed loop to allow all the upper mounting supports (56) to return, after the assembly of a fuselage section (10), to the second positioning station (44) for the panels (18.1 to 18.3).

16. The production unit as claimed in one of claims 13 to 15, wherein the transfer station (62) comprises first and second downstream turntables (90, 90') provided on the first and second paths (58, 60), a transfer path (92) linking the first and second downstream turntables (90, 90') and at least one elevator (94) for at least one of the first and second downstream turntables (90, 90').

17. The production unit as claimed in claim 16, wherein the transfer path (92) is at the same height as the first path (58) and wherein the transfer station (62) comprises a first elevator (94) for the first downstream turntable (90) of the first path (58) and a second elevator (94') for the second downstream turntable (90') of the second path (60).
